# EUROPEAN PATENT APPLICATION

(11) **EP 4 398 651 A1**
(43) Date of publication of application: **10.07.2024**
(21) Application number: 22874516.2
(22) Date of filing: 26.08.2022
(51) Int. Cl.: H04W 52/02

(54) **WAKEUP SIGNAL TRANSMITTING METHOD AND APPARATUS**

(30) Priority: 28.09.2021 CN 202111146311; 05.11.2021 CN 202111308989
(71) Applicant: Huawei Technologies Co., Ltd., Shenzhen, Guangdong 518129 (CN)
(72) Inventor: XUE, Yifan, Shenzhen, Guangdong 518129 (CN); XUE, Lixia, Shenzhen, Guangdong 518129 (CN); LI, Qiang, Shenzhen, Guangdong 518129 (CN)
(74) Representative: Körber, Martin Hans
(86) International application number: PCT/CN2022/115282
(87) International publication number: WO 2023/051124

(57) **Abstract**

This specification discloses a wake-up signal sending method and an apparatus, to resolve a problem of how UE accurately identifies information in a WUR signal received via a wake-up circuit. The method may include: designing a first time domain resource that is in the following format and that is used to transmit a wake-up signal: The first time domain resource includes N first time units with a preset length, one wake-up signal occupies at least one of the N first time units with the preset length, N is a positive integer, and a boundary location of the first time unit is determined based on a time domain location of a synchronization signal, so that a boundary location of the wake-up signal is determined, and a terminal prepares for identifying the wake-up signal. The solutions of this application may be widely applied to the fields of communication technologies, artificial intelligence, internet of vehicles, smart home networking, and the like.

## Description

This application claims priorities to Chinese Patent Application No. 202111146311.5, filed with the China National Intellectual Property Administration on September 28, 2021 and entitled "WUR FRAME STRUCTURE DESIGN METHOD", and to Chinese Patent Application No. 202111308989.9, filed with the China National Intellectual Property Administration on November 5, 2021 and entitled "WAKE-UP SIGNAL SENDING METHOD AND APPARATUS", both of which are incorporated herein by reference in their entireties.

### TECHNICAL FIELD

Embodiments of this application relate to the field of communication technologies, and in particular, to a wake-up signal sending method and an apparatus.

### BACKGROUND

Currently, when user equipment (user equipment, UE) is in an idle (idle) state/inactive (inactive) state, the UE obtains a paging frame (paging frame, PF) and a location of a paging occasion (paging occasion, PO) in the PF through calculation based on a UE identifier (UE ID) of the UE, and receives paging in the PO. A same receiving module is used regardless of whether the UE performs the paging receiving procedure in the idle state/inactive state or the UE receives data in a connected state.

To further reduce power consumption of the UE, a separate low-power small circuit may be used to receive a paging-related message. The small circuit may be referred to as a wake-up circuit, a low-power circuit, or another name, and a signal received via the wake-up circuit may be referred to as a wake-up signal/radio (wake-up signal/radio, WUS/WUR). How the UE accurately identifies information in a WUR signal received via the wake-up circuit becomes an urgent problem to be resolved.

### SUMMARY

Embodiments of this application provide a wake-up signal sending method and an apparatus, to resolve a problem of how UE accurately identifies information in a WUR signal received via a wake-up circuit.

To achieve the foregoing objective, the following technical solutions are used in embodiments of this application.

According to a first aspect, an embodiment of this application provides a wake-up signal sending method, and the method includes: A terminal receives a synchronization signal from a network device, and receives, on a first time domain resource, a wake-up signal that is from the network device and that indicates at least paging-related information. A format of the first time domain resource is designed as follows: The first time domain resource includes N first time units with a preset length, one wake-up signal occupies at least one of the N first time units with the preset length, and a boundary location of the first time unit is determined based on a time domain location of the synchronization signal.

Correspondingly, according to a second aspect, an embodiment of this application further provides a wake-up signal sending method. The method may be performed by a network device. The method may include: The network device sends a synchronization signal to a terminal, and the network device sends, on a first time domain resource, a wake-up signal at least indicating paging-related information to the terminal. Designs of the first time domain resource and the first time unit are described in the first aspect. Details are not described again.

Based on the foregoing methods, this application defines a time domain resource used to transmit the wake-up signal, and a boundary location of the time domain resource. For example, a boundary location of a time unit used to transmit the wake-up signal is determined based on the time domain location of the synchronization signal. In this way, the terminal learns a start location of the wake-up signal and a time domain location for detecting/receiving the wake-up signal, thereby reducing a quantity of times the terminal decodes the paging-related information (for example, a paging message) (that is, decoding is attempted only at the boundary location of the first time unit, instead of being attempted at any symbol location). This further reduces a false alarm probability of the terminal, and avoids a problem that the false alarm probability is high because the terminal attempts to perform decoding at any symbol location in an existing manner.

In a possible design, the first time unit includes a plurality of symbols, and one symbol corresponds to one coded bit. In this way, one symbol transmits one coded bit, and a format is distinguished from a format of an existing system (for example, an NR system).

In a possible design, that a boundary location of the first time unit is determined based on a time domain location of the synchronization signal includes: The boundary location of the first time unit is determined based on a start location of the synchronization signal; or the boundary location of the first time unit is determined based on an end location of the synchronization signal. Based on this possible design, the boundary location of the first time unit may be effectively and flexibly determined based on the time domain location of the synchronization signal, thereby simplifying a system design.

In a possible design, the first time unit is a 1^{st} time unit in the first time domain resource, and that the boundary location of the first time unit is determined based on a start location of the synchronization signal includes: A start location of the first time unit is a location that is after the start location of the synchronization signal and that is at a first preset gap from the start location of the synchronization signal. That the boundary location of the first time unit is determined based on an end location of the synchronization signal includes: The start location of the first time unit is the end location of the synchronization signal; or the start location of the first time unit is a location that is after the end location of the synchronization signal and that is at a second preset gap from the end location of the synchronization signal. In other words, it may be designed that the boundary location of the first time unit overlaps a boundary location of the synchronization signal, or it may be designed that there is a specific gap between the boundary location of the first time unit and a boundary location of the synchronization signal, so that the boundary location of the first time unit is aligned.

In a possible design, the wake-up signal includes indication information that indicates an index value of a first time unit occupied by the wake-up signal or an index value of a start time unit occupied by the wake-up signal. In this way, the terminal may determine, based on the indication information carried in the wake-up signal, a location of the currently received wake-up signal, thereby improving receiving accuracy.

In a possible design, that a terminal receives a wake-up signal from the network device includes: The terminal obtains a timing index that indicates an index value of the first time domain resource, and receives the wake-up signal from the network device in a time window based on the timing index and first configuration information that is used to configure the time window. The time window is included in the first time domain resource, or the time window includes the first time domain resource. Based on this possible design, the terminal may perform system timing, and locate a time location at which the terminal receives the wake-up signal, to be woken up in advance at the time location to prepare for receiving the wake-up signal, thereby improving accuracy of receiving the wake-up signal.

In a possible design, the timing index is determined based on first information carried in the synchronization signal; there is a mapping relationship between a timing index and a synchronization sequence of a synchronization signal, and the timing index is determined based on a mapping relationship and a synchronization sequence of the synchronization signal; or the timing index is determined based on second information and a synchronization sequence of the synchronization signal. Based on this possible design, the timing index is effectively and flexibly obtained, thereby simplifying a system design.

In a possible design, that the timing index is determined based on second information and a synchronization sequence of the synchronization signal includes: The timing index is determined based on M1 information bits carried in the synchronization signal and M2 information bits. The second information includes the M1 information bits, there is a mapping relationship between the M2 information bits and the synchronization sequence of the synchronization signal, the M2 information bits are determined based on the synchronization sequence of the synchronization signal, and M1 and M2 are positive integers. Based on this possible design, the timing index may be comprehensively determined based on the information bits and the synchronization sequence in the synchronization signal, thereby simplifying a system design.

In a possible design, a start location of the first time domain resource is the end location of the synchronization signal; or a start location of the first time domain resource is a location that is after the end location of the synchronization signal and that is at a third preset gap from the end location of the synchronization signal. An end location of the first time domain resource is a start location of a next synchronization signal adjacent to the synchronization signal; or an end location of the first time domain resource is a location that is before a next synchronization signal adjacent to the synchronization signal and that is at a fourth preset gap from a start location of the next synchronization signal adjacent to the synchronization signal. In this way, a boundary location of the first time domain resource may be flexibly and effectively determined.

In a possible design, the wake-up signal includes a first wake-up signal and a second wake-up signal. A data rate of the first wake-up signal is lower than a data rate of the second wake-up signal. A quantity of first time units occupied by the first wake-up signal is greater than a quantity of first time units occupied by the second wake-up signal. In this way, a quantity of time units occupied by wake-up signals with different data rates is designed according to a requirement, thereby simplifying a system design, and meeting data rate requirements of different terminals.

In a possible design, the network device sends, to the terminal, second configuration information that is used to configure a reserved resource, and the terminal receives the second configuration information, so that the terminal cannot send the synchronization signal on the reserved resource based on the second configuration information. The reserved resource is included in a candidate sending location of the synchronization signal, and the candidate sending location of the synchronization signal is determined based on a sending periodicity of the synchronization signal. In this way, the terminal may avoid an interference problem caused by sending a synchronization signal with another terminal at a same location.

In a possible design, a waveform of the synchronization signal is the same as a waveform of the wake-up signal; and/or a modulation scheme of the synchronization signal is the same as a modulation scheme of the wake-up signal. The modulation scheme of the synchronization signal and the modulation scheme of the wake-up signal are on-off keying (on-off keying, OOK) OOK; and/or the waveform of the synchronization signal and/or the waveform of the wake-up signal are/is OOK. In this way, waveforms and modulation schemes of the synchronization signal and the wake-up signal are flexibly and effectively designed.

In a possible design, one or more terminals that need to receive paging and that are indicated by the wake-up signal include the terminal. The method further includes: The terminal receives first information from the network device and/or performs random access. The first information includes one or more of the following information: paging downlink control information (downlink control information, DCI), a paging message (paging message), and a paging early indication (paging early indication, PEI). In this way, it helps the terminal to access a network and communicate with the network device.

In a possible design, the terminal includes a first module and a second module. The terminal receives the synchronization signal and the wake-up signal via the first module, and the terminal receives the first information and/or performs random access via the second module. The terminal receives the synchronization signal and the wake-up signal through a first link, where a frequency domain resource corresponding to the first link includes a first frequency domain resource; and the terminal receives the first information from the network device and/or performs random access through a second link, where a frequency domain resource corresponding to the second link includes a second frequency domain resource. In this way, it may be designed that the terminal separately performs different functions through different modules/links, the modules that perform different functions are independently deployed, and the links that perform different functions are independently deployed. Different modules/links are used to perform working according to a requirement, thereby reducing system overheads of the terminal and facilitating management of different communication processes.

In a possible design, the first frequency domain resource is the same as or different from the second frequency domain resource. In this way, frequency domain resources corresponding to the first link and the second link are flexibly and effectively designed, to implement intra-frequency transmission or inter-frequency transmission.

According to a third aspect, this application provides a communication apparatus. The communication apparatus may be a terminal, a chip in a terminal, or a system on chip; or may be a functional module that is in a terminal and that is configured to implement the method according to any one of the first aspect or the possible designs of the first aspect. Alternatively, the communication apparatus may be a network device, a chip in a network device, or a system on chip; or may be a functional module that is in a network device and that is configured to implement the method according to any one of the second aspect or the possible designs of the second aspect. The communication apparatus may implement functions performed by the terminal or the network device in the foregoing aspects or the possible designs, and the functions may be implemented by hardware executing corresponding software. The hardware or the software includes one or more modules corresponding to the functions. For example, the communication apparatus may include a sending unit and a receiving unit. Further, the communication apparatus may include a processing unit.

In a possible design, the sending unit is configured to send, on a first random access resource, a first message to the network device.

The receiving unit is configured to: receive, by the terminal, a synchronization signal from the network device; and receive, on a first time domain resource, a wake-up signal that is from the network device and that indicates at least paging-related information. A format of the first time domain resource is designed as follows: The first time domain resource includes N first time units with a preset length, one wake-up signal occupies at least one of the N first time units with the preset length, and a boundary location of the first time unit is determined based on a time domain location of the synchronization signal.

In another possible design, the sending unit is configured to: send a synchronization signal to the terminal; and send, on a first time domain resource, a wake-up signal indicating at least paging-related information to the terminal.

Specifically, for designs of the first time domain resource and the first time unit, refer to any one of the first aspect, the second aspect, the possible designs of the first aspect, or the possible designs of the second aspect. In addition, for an action performed by each unit of the communication apparatus, refer to any one of the first aspect, the possible designs of the first aspect, the second aspect, or the possible designs of the second aspect. Details are not described again.

According to a fourth aspect, a communication apparatus is provided. The communication apparatus may be a terminal, a chip in a terminal, or a system on chip. The communication apparatus may implement functions performed by the terminal in the foregoing aspects or the possible designs, and the functions may be implemented by hardware. Alternatively, the communication apparatus may be a network device, a chip in a network device, or a system on chip. The communication apparatus may implement functions performed by the network device in the foregoing aspects or the possible designs, and the functions may be implemented by hardware. In a possible design, the communication apparatus may include a processor and a communication interface. The processor and the communication interface may support the communication apparatus in performing the method according to any one of the first aspect or the possible designs of the first aspect or any one of the second aspect or the possible designs of the second aspect. In another possible design, the communication apparatus may further include a memory. The memory is configured to store computer execution instructions and data that are necessary for the communication apparatus. When the communication apparatus runs, the processor executes the computer execution instructions stored in the memory, the communication apparatus is enabled to perform the wake-up signal sending method according to any one of the first aspect or the possible designs of the first aspect or any one of the second aspect or the possible designs of the second aspect.

According to a fifth aspect, a computer-readable storage medium is provided. The computer-readable storage medium may be a readable non-volatile storage medium. The computer-readable storage medium stores instructions. When the instructions are run on a computer, the computer is enabled to perform the wake-up signal sending method according to any one of the first aspect or the possible designs of the first aspect or any one of the second aspect or the possible designs of the second aspect.

According to a sixth aspect, a computer program product including instructions is provided. When the computer program product is run on a computer, the computer is enabled to perform the wake-up signal sending method according to any one of the first aspect or the possible designs of the first aspect or any one of the second aspect or the possible designs of the second aspect.

According to a seventh aspect, a communication apparatus is provided. The communication apparatus may be a terminal, a chip in a terminal, or a system on chip. The communication apparatus includes one or more processors and one or more memories. The one or more memories are coupled to the one or more processors. The one or more memories are configured to store computer program code. The computer program code includes computer instructions. When the one or more processors execute the computer instructions, the terminal is enabled to perform the wake-up signal sending method according to any one of the first aspect or the possible designs of the first aspect or any one of the second aspect or the possible designs of the second aspect.

For technical effects brought by any design of the fourth aspect to the seventh aspect, refer to the technical effects brought by any one of the first aspect or the possible designs of the first aspect. Details are not described again.

According to an eighth aspect, an embodiment of this application provides a communication system. The communication system may include a terminal and a network device. The terminal may perform the wake-up signal sending method according to any one of the first aspect or the possible designs of the first aspect, and the network device may perform the wake-up signal sending method according to any one of the second aspect or the possible designs of the second aspect.

### BRIEF DESCRIPTION OF DRAWINGS

FIG. 1 is a schematic diagram of a receiving circuit of a terminal;
FIG. 2 is a schematic diagram of a wake-up signal;
FIG. 3a is a schematic diagram of synchronization signals transmitted alongside;
FIG. 3b is a schematic diagram of synchronization signals transmitted periodically;
FIG. 3c is a schematic diagram of signal transmission;
FIG. 4 is a schematic diagram of a communication system according to an embodiment of this application;
FIG. 5a is a schematic diagram 1 of a communication apparatus 500 according to an embodiment of this application;
FIG. 5b is a schematic diagram 2 of a communication apparatus 500de according to an embodiment of this application;
FIG. 6 is a flowchart of a wake-up signal sending method according to an embodiment of this application;
FIG. 7a to FIG. 7h are schematic diagrams of WUR frame formats according to an embodiment of this application;
FIG. 8a to FIG. 8d are schematic diagrams of WUR frame formats according to an embodiment of this application;
FIG. 9a to FIG. 9d are schematic diagrams of WUR frame formats according to an embodiment of this application;
FIG. 10a to FIG. 10f are schematic diagrams of WUR frame formats of wake-up signals carrying different data rates according to an embodiment of this application;
FIG. 10g is a schematic diagram of sending synchronization signals of different cells according to an embodiment of this application;
FIG. 11 is a schematic diagram of a communication apparatus 110 according to an embodiment of this application;
FIG. 12 is a schematic diagram of a communication apparatus 120 according to an embodiment of this application; and
FIG. 13 is a schematic diagram of composition of a communication system according to an embodiment of this application.

### DESCRIPTION OF EMBODIMENTS

Before embodiments of this application are described, some terms (such as paging) in embodiments of this application are explained and described. It should be noted that, the following explanations and descriptions are intended to facilitate understanding of embodiments of this application, but should not be considered as a limitation on the protection scope required by embodiments of this application.

Paging (paging) is a process in which a network device periodically sends a paging message (paging message) to a terminal in an idle (idle) state or an inactive (inactive) state, to wake up the terminal in the idle state or the inactive state to return to a connected (connected) state. The process includes: The network device (for example, an access network device) calculates a paging frame (paging frame, PF) corresponding to the terminal and a paging occasion (paging occasion, PO) in the PF, and on the PO corresponding to the terminal, sends a physical downlink control channel (physical downlink control channel, PDCCH) carrying paging DCI to the terminal. The paging DCI may schedule a physical downlink shared channel (physical downlink control channel, PDSCH) carrying the paging message (paging message). If the paging DCI indicates that the PDSCH carrying the paging message is scheduled, the network device sends, at a resource location indicated by the paging DCI, the PDSCH carrying the paging message. Correspondingly, on the PO corresponding to the terminal, the terminal monitors the paging DCI. If the terminal receives the paging DCI, the terminal receives, based on the received paging DCI, the PDSCH carrying the paging message, and determines, based on the PDSCH carrying the paging message, whether the terminal is paged. For example, if the paging message received by the terminal carries identifier information (for example, a user equipment identifier (user equipment identifier, UE ID)) of the terminal, it is determined that the terminal is paged. On the contrary, it is determined that the terminal is not paged. If the terminal is paged, the terminal initiates a random access procedure, switches to the connected (connected) state, establishes a communication connection with the network device, and performs data communication with the network device.

Currently, a same functional module is used in both the paging process of the terminal and the data communication process in the connected state. The functional module may be referred to as a main circuit or a second module. However, compared with the data communication in the connected state, performing the paging process may not require excessive power consumption, and performing the paging process via the main circuit may bring more power consumption. Therefore, to further reduce power consumption of the terminal, a main circuit and a separate low-power small circuit may be separately deployed on the terminal. The low-power small circuit may receive paging-related information in a low-power situation, for example, receive information that is from the network device and that is of one or more terminals requiring paging.

In embodiments of this application, the low-power small circuit is mainly configured to support the terminal in an idle state or an inactive state in receiving paging-related information. The low-power small circuit may be referred to as a wake-up circuit, a low-power circuit, a wake-up signal (wake-up signal, WUS) receiver, a wake-up radio (wake-up radio, WUR) receiver, a first module, a first circuit, or the like. This is not limited. In this application, the wake-up circuit is used as an example for description. This is uniformly described herein, and details are not described again. A signal received via the wake-up circuit may be referred to as a WUR signal, and the WUR signal may include a paging-related signal. For example, the WUR signal may include a wake-up signal, and may further include a synchronization signal. The wake-up signal indicates at least paging-related information (for example, indicates terminal information that needs to be received). The wake-up signal may further be named a WUS signal, a wake-up radio (wake-up radio, WUR) signal, or the like. Receiving a WUR signal (for example, a wake-up signal) via the wake-up circuit may be understood as working on a WUR link, receiving a wake-up signal on a WUR link, receiving a WUR signal in a first state/first mode (model), or the like.

In embodiments of this application, the main circuit is mainly configured to support the terminal in a connected state in performing data communication with the network device, may be configured to support the terminal in accessing the network device, or may be configured to support the terminal in performing a paging process (that is, receiving a paging DCI and a paging PDSCH, and the like) in an existing standard. The main circuit may be referred to as a second module, a second circuit, or another name. Performing data communication via the main circuit may be understood as performing data communication through a main link, performing data communication in a second state/second module, or the like.

In embodiments of this application, the first state may be understood as a state when the terminal turns on the wake-up circuit and turns off the main circuit. The first state may be referred to as a WUR state, a wake-up state, or another state. This is not limited. The first mode may be understood as a first working mode, a WUR mode, a wake-up mode, or a WUR working mode. The first mode may mean that the terminal works in the first state, the terminal works on the WUR link, the terminal works via the wake-up circuit, or the like.

In embodiments of this application, the second state may be understood as a state when the terminal turns off the wake-up circuit and turns on the main circuit. The second state may be referred to as a main state or may be named as another state. This is not limited. A second mode may be understood as a second working mode, a main mode, or a main working mode. The second mode may mean that the terminal works in the second state, the terminal works on the main link, the terminal works via the main circuit, or the like.

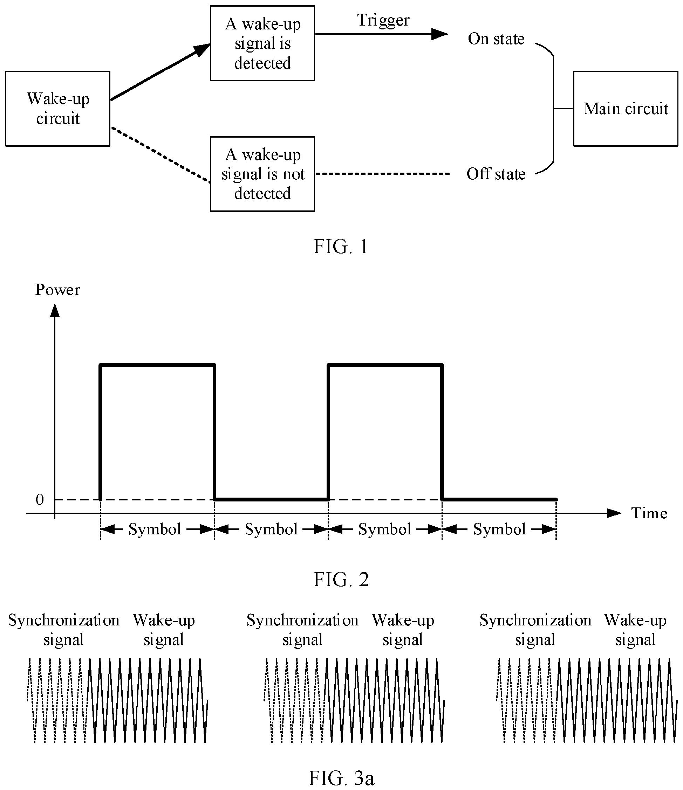

For example, as shown in FIG. 1, a wake-up circuit and a main circuit are deployed in a terminal. When the terminal is in a first state (for example, a WUR state), an idle state, or an inactive state, the wake-up circuit is turned on (or referred to as working), and the main circuit is turned off (or referred to as not working). The terminal may receive a wake-up signal via the wake-up circuit. If the terminal detects a wake-up signal that wakes up the terminal, the terminal triggers to turn on the main circuit, so that the main circuit is in an on state. If the terminal does not detect a wake-up signal, the terminal does not trigger to turn on the main circuit. In this case, the main circuit is in an off state. The manner shown in FIG. 1 may reduce power consumption of the terminal.

In embodiments of this application, to reduce power consumption of the wake-up circuit, the wake-up signal is modulated through binary amplitude keying (for example, on-off keying (on-off keying, OOK)). Correspondingly, the wake-up circuit may demodulate the wake-up signal by using an envelope detection method (or a 0/1 decision method). When the OOK is used for modulation, one information bit (or referred to as an encoded bit or a coded bit) of the wake-up signal that is encoded corresponds to one symbol (symbol). For example, when an information bit is 1, it indicates that a signal is sent in a length of a symbol corresponding to the information bit (or may be understood as that a signal power in a length of the symbol is not 0). When an information bit is 0, it indicates that no signal is sent in a length of a symbol corresponding to the information bit (or may be understood as that a signal power in a length of the symbol is 0). Alternatively, when an information bit is 0, it indicates that a signal is sent in a length of a symbol corresponding to the information bit (or may be understood as that a signal power in a length of the symbol is not 0). When an information bit is 1, it indicates that no signal is sent in a length of a symbol corresponding to the information bit (or may be understood as that a signal power in a length of the symbol is 0).

It should be understood that the symbol in this application may also be referred to as a chip (chip). A length of the symbol may be a time length between a start location of the symbol and an end location of the symbol. The length of the symbol may be preconfigured, or prespecified in a protocol. For example, a length of a symbol may be set to 4 microseconds (µs) or the like.

It may be learned from the foregoing that, when the WUR link is used for working, the wake-up signal is transmitted at a granularity of a symbol. To detect the wake-up signal, a boundary location of the symbol needs to be learned. The received wake-up signal is detected starting from the boundary location of the symbol, and whether there is a signal on the symbol is detected. Detection results corresponding to a plurality of symbols are combined together to determine the obtained wake-up signal, and whether the terminal is paged/woken up is determined based on the wake-up signal. For example, it is assumed that an information bit being 1 indicates that there is a signal, an information bit being 0 indicates that there is no signal, and a wake-up signal modulated through OOK is "1010", including four coded bits. The four coded bits may correspond to four symbols shown in FIG. 2. A signal power in lengths of a first symbol and a third symbol that start from the left is greater than 0, there are signals, and the first symbol and the third symbol correspond to coded bits "1". A signal power in lengths of a second symbol and a fourth symbol is 0, there is no signal, and corresponding coded bits are 0. In this case, the terminal may attempt to perform decoding at any symbol location starting from a boundary of the first symbol, to obtain a wake-up signal 1010, and then determine, based on the wake-up signal 1010, whether the terminal is woken up.

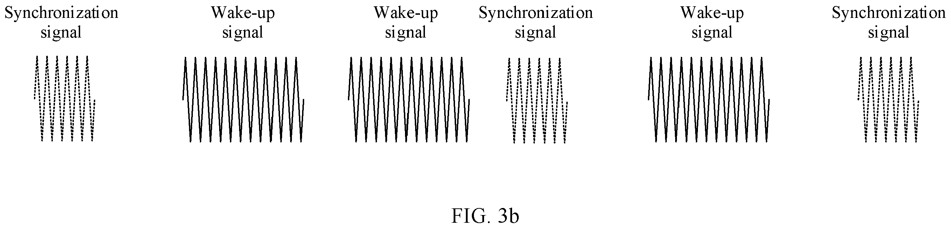

Optionally, a synchronization (synchronization, sync) signal is used to locate the boundary location of the symbol transmitted on the WUR. The synchronization signal may be used by the terminal to perform time synchronization. For example, in a possible design, as shown in FIG. 3a, synchronization signals are sent alongside. That is, a wake-up signal and a synchronization signal are sent together. A start location of the wake-up signal overlaps an end location of the synchronization signal. After receiving the synchronization signal and completing time synchronization by using the synchronization signal, the terminal may directly locate a boundary of a symbol in which the wake-up signal is located, and further detect the wake-up signal on the corresponding symbol. In another possible design, as shown in FIG. 3b, synchronization signals are periodically sent, and a wake-up signal is sent in a time period (or a plurality of symbols) between two adjacent synchronization signals. After receiving the synchronization signal and completing time synchronization by using the synchronization signal, the terminal may obtain a symbol location, for example, obtain a boundary location (or a start location) of a symbol, so as to select, based on the boundary location of the symbol, a time location for envelope detection (or referred to as a 0/1 decision), for example, performing a decision at a center location of a symbol.

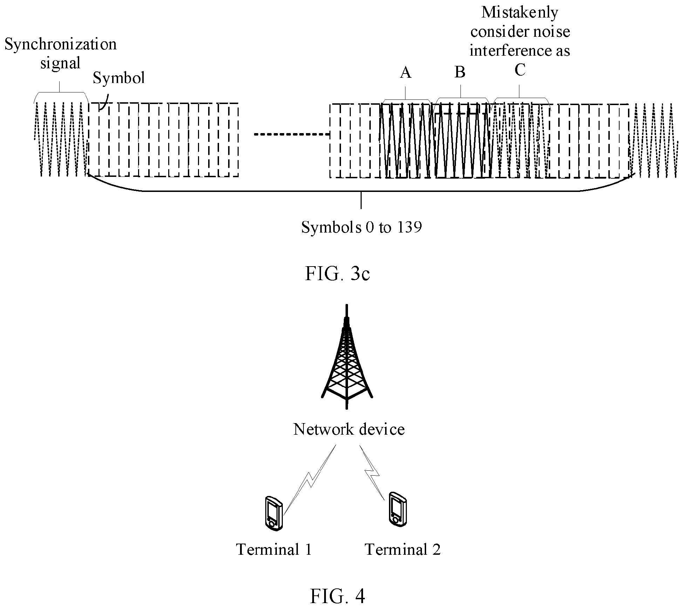

However, in a process of periodically sending the synchronization signals, the terminal sequentially detects wake-up signals in a symbol sequence in a periodicity starting from a symbol boundary located by the terminal, that is, attempts to perform decoding at any symbol location. A large quantity of decoding times causes a high false alarm probability. For example, as shown in FIG. 3c, it is assumed that there are 140 symbols between adjacent synchronization signals: a symbol 0 to a symbol 139. A cell includes UE 1 and UE 2, an identifier of the UE 1 is AB, and an identifier of the UE 2 is BC. If a base station needs to wake up the UE 1 in the cell, the base station sends a wake-up signal "AB" on the symbol 112 to the symbol 125, where "A" and "B" occupy a plurality of symbols. For the UE 1 and the UE 2, the manner shown in FIG. 3b may be used to locate and obtain a boundary location of the symbol 0. Detection is started from the boundary location of the symbol 0, until the symbol 112 to the symbol 118 are detected to obtain "A", and the symbol 119 to the symbol 125 are detected to obtain "B". The UE 1 determines, based on a detection result, that the UE 1 is woken up. However, the UE 2 finds that the detection result "AB" is not its own, and continues to detect the symbol 126 to the symbol 132. In this case, if there is noise interference on the symbol 126 to the symbol 132, the UE 2 mistakenly detects the noise interference as "C". Then, the UE 2 determines, with reference to a detection result "BC" on the symbol 119 to the symbol 125 and on the symbol 126 to the symbol 132, that the UE 2 is woken up. Actually, the UE 1 instead of the UE 2 is woken up. A false alarm probability of the UE 2 is increased.

To resolve a problem that a false alarm probability of a terminal is high in a process of periodically sending synchronization signals, an embodiment of this application provides a wake-up signal sending method. The method may include: A network device sends, on a first time domain resource after a time domain location of a synchronization signal, a wake-up signal to a terminal; and correspondingly, the terminal receives, on the first time domain resource, the wake-up signal. The first time domain resource may be a predefined resource. A format of the first time domain resource is as follows: The first time domain resource includes N first time units, and the first time unit may be used to carry/transmit a wake-up signal. For example, at least one of the N first time units carries a wake-up signal. A boundary location of the first time unit is also predefined. For example, the boundary location of the first time unit may be determined based on the time domain location of the synchronization signal. In this way, a time domain resource used to transmit the wake-up signal, and a boundary location of the time domain resource may be defined. In this way, the terminal learns a start location of the wake-up signal and a time domain location for detecting/receiving the wake-up signal, thereby reducing a quantity of times the terminal decodes paging-related information (for example, a paging message) (that is, decoding is attempted only at the boundary location of the first time unit, instead of being attempted at any symbol location). This further reduces a false alarm probability of the terminal, and avoids a problem that the false alarm probability is high because the terminal attempts to perform decoding at any symbol location in an existing manner.

It should be understood that the wake-up signal in this application may at least indicate paging-related information. For example, the wake-up signal may carry a paging message such as a UE ID of a paged terminal, a part of a UE ID of a paged terminal, or a group ID of a paged terminal, and may further carry another information such as a system message or a system configuration. The wake-up signal is one of signals transmitted on the WUR link. In this application, the signal transmitted on the WUR link may be referred to as a WUR signal. In addition to the wake-up signal, another signal such as a synchronization signal may be transmitted on the WUR link. In this case, the WUR signal may further include a synchronization signal and the like.

It should be understood that the WUR link in this application may be a communication link between a wake-up circuit of the terminal and the network device. The wake-up circuit of the terminal may support the terminal in receiving and sending a wake-up signal and another signal such as a synchronization signal through the WUR link. When the terminal works on the WUR link, the wake-up circuit of the terminal is in an on state, and a main circuit of the terminal is in an off state. Optionally, a transmission resource may be preconfigured for the WUR link. The transmission resource may include a time domain resource and/or a frequency domain resource. Transmitting a signal (for example, a wake-up signal) through the WUR link may be understood as transmitting a signal on the WUR link, transmitting a signal through a transmission resource corresponding to the WUR link, or the like. It should be noted that the time domain resource in this application may be further understood as a time resource, the frequency domain resource in this application may be further understood as a frequency resource, or the like.

It should be understood that the main link in this application may be a communication link between the main circuit of the terminal and the network device. The main circuit of the terminal may support the terminal in a connected state in receiving and sending a signal and/or performing data transmission with the network device through the main link. When the terminal works on the main link, the main circuit of the terminal is in an on state, and the wake-up circuit of the terminal is in an off state. Optionally, a transmission resource may be preconfigured for the main link. The transmission resource includes a time domain resource and/or a frequency domain resource. Transmitting a signal through the main link may be understood as transmitting a signal on the main link or transmitting a signal through a transmission resource corresponding to the main link.

It should be noted that a message name, a parameter name in a message, or the like in embodiments of this application is only an example, and another name may be used during specific implementation. For example, the time domain resource in this application may further be named a time resource or another name. The time domain resource may include a plurality of small time periods (or referred to as time lengths). In other words, the time domain resource may be divided into a plurality of time periods, and one time period may be one symbol, one slot (slot), one scheduling unit, millisecond (ms) time, or the like. The frequency domain resource in this application may further be named a frequency resource or another name. The frequency domain resource may include one or more frequency domain units (or referred to as frequency units). The frequency domain unit may be a resource element (resource element, RE), a resource block (resource block, RB), or a physical resource block (physical resource block, PRB). The WUR link may be referred to as a first link, and the main link may be referred to as a second link. This is not limited.

With reference to the accompanying drawings in this specification, the following describes the wake-up signal sending method provided in embodiments of this application.

The wake-up signal sending method provided in embodiments of this application may be applied to any one of a 4th generation (4th generation, 4G) system, a long term evolution (long term evolution, LTE) system, a 5th generation (5th generation, 5G) system, a new radio (new radio, NR) system, an NR-vehicle-to-everything (vehicle-to-everything, V2X) system, or an internet of things system, and may further be applied to another next-generation communication system or the like. This is not limited. The following uses a communication system shown in FIG. 4 as an example to describe the wake-up signal sending method provided in embodiments of this application.

FIG. 4 is a schematic diagram of a communication system according to an embodiment of this application. As shown in FIG. 4, the communication system may include a network device and a plurality of terminals, for example, a terminal 1 and a terminal 2. The terminal may be located in a coverage area of the network device, and the terminal may be connected to the network device through a Uu interface. In FIG. 4, the terminal may be in a first state, for example, in a WUR state, or the terminal is in an idle state or an inactive state. In an example in which the terminal is in a first state (for example, a WUR state), the network device may send, to the terminal through a WUR link according to a requirement, paging-related information corresponding to the terminal. Through the WUR link, the terminal in the first state may periodically monitor whether the terminal is paged or keep monitoring whether the terminal is paged. If the terminal receives the paging-related information corresponding to the terminal, the terminal subsequently initiates random access, for example, sends a preamble to the network device.

It should be noted that FIG. 4 is only an example of a framework diagram. A quantity of nodes included in FIG. 4 is not limited. For example, more terminals may be included, and in addition to the functional nodes shown in FIG. 4, other nodes may further be included, for example, a core network device, a gateway device, and an application server. This is not limited.

The following describes each network element in the system shown in FIG. 4.

The network device is mainly configured to implement functions such as resource scheduling, radio resource management, and radio access control of the terminal. Specifically, the network device may be any node of a small base station, a wireless access point, a transmission receive point (transmission receive point, TRP), a transmission point (transmission point, TP), and another access node. In embodiments of this application, an apparatus configured to implement a function of the network device may be a network device, or may be an apparatus that can support the network device in implementing the function, for example, a chip system (such as a chip, or a processing system including a plurality of chips) or a modem (modem). The following describes the method provided in embodiments of this application by using an example in which the apparatus configured to implement the function of the network device is the network device.

The terminal may be terminal equipment (terminal equipment), user equipment (user equipment, UE), a mobile station (mobile station, MS), a mobile terminal (mobile terminal, MT), or the like. Specifically, the terminal may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a smart home terminal, an in-vehicle terminal, or the like. In embodiments of this application, an apparatus configured to implement a function of the terminal may be a terminal, or may be an apparatus that can support the terminal in implementing the function, for example, a chip system (such as a chip, a processing system including a plurality of chips) or a modem. The following describes the wake-up signal sending method provided in embodiments of this application by using an example in which the apparatus configured to implement the function of the terminal is the terminal.

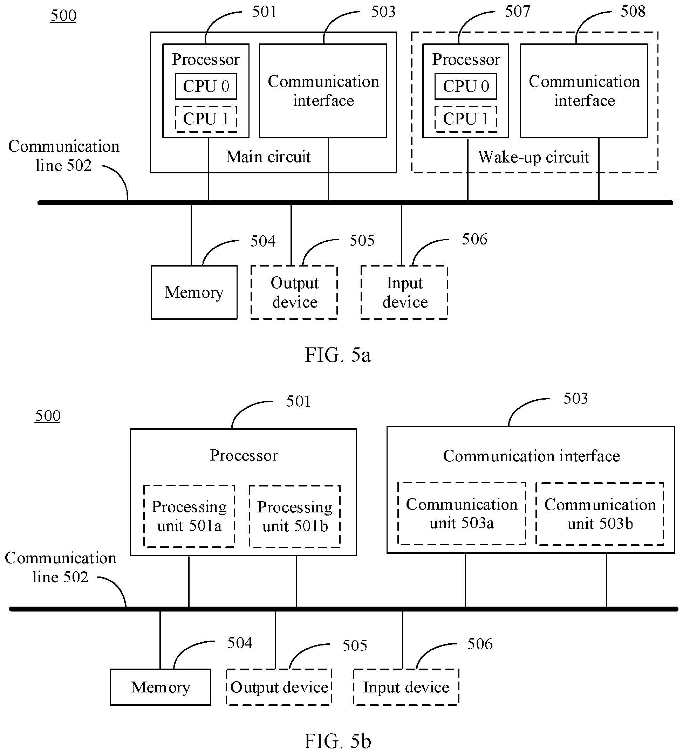

During specific implementation, the network elements shown in FIG. 4, for example, the terminal and the network device, may use a composition structure shown in FIG. 5a or include components shown in FIG. 5a. FIG. 5a is a schematic composition diagram of a communication apparatus 500 according to an embodiment of this application. As shown in FIG. 5a, the communication apparatus 500 may include a processor 501, a communication line 502, and a communication interface 503. Further, the communication apparatus 500 may include a memory 504, an output device 505, and an input device 506. The input device 506 is a keyboard, a mouse, a microphone, a joystick, or the like, and the output device 505 is a display, a speaker (speaker), or the like. These components are connected through the communication line 502.

In a possible design, as shown in FIG. 5a, when the communication apparatus 500 is a terminal or a functional module in a terminal, the communication module 500 may further include a processor 507 and a communication interface 508. The processor 501 and the communication interface 503 may be integrated and deployed in a main circuit of the communication module, and the processor 507 and the communication interface 508 are integrated and deployed in a wake-up circuit of the communication module.

In another possible design, as shown in FIG. 5b, when the communication apparatus 500 is a terminal or a functional module in a terminal, the processor 501 may virtually process two processing units 501a and 501b, and the communication interface 503 may virtualize two communication units 503a and 503b. The processing unit 501a and the communication unit 503a may form a main circuit or a first module of the terminal. The processing unit 501b and the communication unit 503b may form a wake-up circuit or a second module of the terminal.

The processor, for example, the processor 501 or the processor 507, may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 501 may alternatively be another apparatus having a processing function, for example, a circuit, a device, or a software module.

The communication line 502 is configured to transmit information between the components included in the communication apparatus 500.

The communication interface (for example, the communication interface 503 or the communication interface 508) is configured to communicate with another device or another communication network. The another communication network may be an Ethernet, a radio access network (radio access network, RAN), a wireless local area network (wireless local area network, WLAN), or the like. The communication interface 503 may be a radio frequency module, a transceiver, or any apparatus that can implement communication. In embodiments of this application, an example in which the communication interface 503 is a radio frequency module is used for description. The radio frequency module may include an antenna, a radio frequency circuit, and the like. The radio frequency circuit may include a radio frequency integrated chip, a power amplifier, and the like.

The memory 504 is configured to store instructions. The instruction may be a computer program.

The memory 504 may be a read-only memory (read-only memory, ROM) or another type of a static storage device that may store static information and/or instructions, or may be a random access memory (random access memory, RAM) or another type of a dynamic storage device that may store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 504 may exist independently of the processor 501, or may be integrated with the processor 501. The memory 504 may be configured to store instructions, program code, some data, or the like. The memory 504 may be located in the communication apparatus 500 or may be located outside the communication apparatus 500. This is not limited. The processor 501 is configured to execute the instructions stored in the memory 504, to implement the wake-up signal sending method provided in the following embodiments of this application. In an example, the processor 501 may include one or more CPUs, for example, a CPU 0 and a CPU 1. In an optional implementation, the communication apparatus 500 includes a plurality of processors.

It should be noted that the communication apparatus 500 may be a desktop computer, a portable computer, a network server, a mobile phone, a tablet computer, a wireless terminal, an embedded device, a chip system, or a device having a structure similar to that in FIG. 5a or FIG. 5b. In addition, the composition structure shown in FIG. 5a does not constitute a limitation on the communication apparatus. In addition to the components shown in FIG. 5a or FIG. 5b, the communication apparatus may include more or fewer components than those shown in the figure, combine some components, or have different component arrangements.

In embodiments of this application, the chip system may include a chip, or may include a chip and another discrete device.

With reference to the communication system shown in FIG. 4, the following describes the wake-up signal sending method provided in embodiments of this application. Devices in the following embodiments may be the components shown in FIG. 5a or FIG. 5b. In addition, actions, terms, and the like in embodiments may be mutually referenced. In embodiments, names of messages exchanged between devices, names of parameters in the messages, or the like are only examples. During specific implementation, other names may alternatively be used. For example, "wake-up" in the following embodiments may alternatively be described as "paging", and the like. For another example, "setting" may alternatively be described as "configuration". This is uniformly described herein, and is not limited in embodiments of this application.

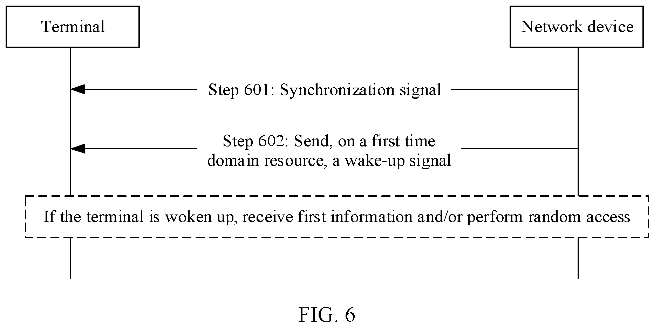

FIG. 6 shows a wake-up signal sending method according to an embodiment of this application. As shown in FIG. 6, the method may include the following steps.

Step 601: A network device sends a synchronization signal to a terminal; and correspondingly, the terminal receives the synchronization signal from the network device.

The network device may be the network device in FIG. 4. The terminal may be the terminal located in the coverage area of the network device in FIG. 4, for example, may be the terminal 1 or the terminal 2 in FIG. 4. The terminal may have at least three states: an idle state, an inactive state, and a connected state. There may be an additional state, for example, a WUR state. The terminal may have/deploy the low-power circuit (or referred to as the wake-up circuit) and the main circuit shown in FIG. 1. When the terminal is in an idle state, an inactive state, or a WUR state, the low-power circuit (or referred to as the wake-up circuit) works, and the main circuit is turned off. When the terminal is in a connected state, the main circuit works, and the low-power circuit (or referred to as the wake-up circuit) is turned off. It should be understood that when the method shown in FIG. 6 is performed, the terminal is in the idle mode, the inactive mode, or the WUR mode.

In this application, the synchronization signal may be used by the terminal to perform time synchronization, for example, may be used to locate a boundary location of a symbol. The synchronization signal may be transmitted through a WUR link. In other words, the synchronization signal may be carried on a transmission resource (for example, a time domain resource and/or a frequency domain resource) corresponding to the WUR link for transmission. In this application, the transmission resource corresponding to the WUR link may be referred to as a WUR resource, and the WUR resource may include one or more WUR frames and a first frequency domain resource. In a possible design, one WUR frame is used to transmit a wake-up signal. In another possible design, one WUR frame may be used to transmit a synchronization signal and another signal (for example, a wake-up signal). One frame may include a plurality of time units. Specifically, the WUR resource may be preconfigured by the network device. A function of the WUR frame may be preconfigured by the network device, or may be prespecified in a protocol. For a related description of the WUR link, refer to the foregoing description. Details are not described again.

In this application, synchronization signals may be periodically sent. A periodicity of a synchronization signal and a transmission resource (for example, a time domain start location/end location, a frequency domain start location/end location, and a time domain length) of a synchronization signal may be preconfigured/set, for example, may be prespecified in a protocol.

In addition to transmitting the synchronization signal, another signal, for example, a wake-up signal, may be also transmitted on the WUR link. The wake-up signal is used as an example. To ensure that the synchronization signal is not interfered with during transmission in the WUR frame, in a possible design, the transmission resource of the synchronization signal may be set not to overlap a transmission resource of the wake-up signal transmitted on the WUR link. For example, a time domain resource of the synchronization signal is set not to overlap a time domain resource of the wake-up signal transmitted on the WUR link, and there is a specific gap (gap) between the time domain resource of the synchronization signal and the time domain resource of the wake-up signal transmitted on the WUR link. Specifically, there may be a gap between an end location of the synchronization signal and a start location of the wake-up signal. A length of the time domain resource of the synchronization signal and a length of the gap are equal/the same in each periodicity, and there is a same length from a start location of the synchronization signal to a start location of the transmission resource of the wake-up signal in each periodicity. The gap may be preset. Alternatively, in another possible design, an end location of the synchronization signal is a start location of the wake-up signal. That is, the end location of the synchronization signal overlaps the start location of the wake-up signal. Specifically, a location relationship between the transmission resource of the synchronization signal transmitted on the WUR and a transmission resource of another signal (for example, a wake-up signal) transmitted on the WUR may be preset. This is not limited.

It should be noted that, in embodiments of this application, the transmission resource of the synchronization signal may be a time domain resource that is allowed to be occupied by the synchronization signal, a time domain resource that may be used to carry the synchronization signal, or a candidate sending location of the synchronization signal. A length of the transmission resource of the synchronization signal may alternatively be described as a length of the synchronization signal. A transmission resource block occupied by the synchronization signal may be a transmission resource that is actually occupied by the synchronization signal and that is in the transmission resource of the synchronization signal. The transmission resource occupied by the synchronization signal may be less than or equal to the transmission resource of the synchronization signal. Similarly, the transmission resource of the wake-up signal may be a transmission resource that is allowed to be occupied by the wake-up signal, a transmission resource that may be used to carry the wake-up signal, or a candidate sending location of the wake-up signal, and a length of the transmission resource of the wake-up signal may alternatively be described as a length of the wake-up signal. In this case, for the transmission resource of the wake-up signal, whether the wake-up signal actually occupies the transmission resource depends on whether a terminal is paged. The transmission resource occupied by the wake-up signal may be a transmission resource that is actually occupied by the wake-up signal and that is in the transmission resource of the wake-up signal.

For example, the network device may carry the synchronization signal on the preconfigured transmission resource, and periodically send the synchronization signals to the terminal through the WUR link. Correspondingly, the terminal periodically receives the synchronization signals from the network device on the WUR link via the wake-up circuit (or referred to as the low-power circuit or a first module) deployed in the terminal. It should be understood that, in this application, that the terminal periodically receives the synchronization signals from the network device on the WUR link may alternatively be described as that the terminal receives the synchronization signals from the network device via the first module, or the terminal in a first state or a first mode periodically receives the synchronization signals from the network device.

Optionally, to help the terminal detect a synchronization signal, the network device may perform OOK modulation on the synchronization signal and then send the synchronization signal to the terminal. In this case, a modulation scheme of the synchronization signal is OOK, or a waveform of the synchronization signal is OOK. For example, the waveform of the synchronization signal may be a square wave shown in FIG. 2, or the waveform of the synchronization signal may be a waveform similar to a square wave constructed based on an orthogonal frequency division multiplexing (orthogonal frequency division multiplexing, OFDM) signal.

Step 602: The network device sends, on a first time domain resource, the wake-up signal to the terminal. Correspondingly, the terminal receives, on the first time domain resource, the wake-up signal from the network device.

Further, if the terminal is included in one or more terminals that need to receive paging and that are indicated by the wake-up signal, that is, information that is included in the wake-up signal and that indicates the one or more terminals needing to receive paging includes information corresponding to the terminal, it means that the terminal needs to be woken up. The method shown in FIG. 6 may further include: The network device sends first information to the terminal and/or interacts with the terminal to perform a random access procedure. Interacting with the terminal to perform the random access procedure may include: The network device receives a preamble sent by the terminal, and the like. Correspondingly, the terminal receives the first information from the network device and/or performs random access. The first information includes one or more pieces of paging DCI, a paging message, and a paging early indication (paging early indication, PEI).

Specifically, the terminal may receive the first information from the network device and/or perform random access on a main link (which may be referred to as a second link) through a second module (for example, a main circuit). The second link corresponds to a second frequency domain resource, and the second frequency domain resource may be the same as or different from the first frequency domain resource corresponding to the WUR link. When the terminal receives the first information from the network device and/or performs random access, the terminal may be in a second state or a second mode. In other words, the terminal in the second state or the second mode may receive the first information from the network device and/or perform random access. Performing random access may include: The terminal sends the preamble to the network device, and the like.

In embodiments of this application, the first time domain resource may be understood as a segment of a time resource that includes N first time units with a preset length. The first time domain resource may be named a WUR frame, a wake-up frame, or another name. This is not limited. In this application, an example in which the first time domain resource is a WUR frame is used for description. This is uniformly described herein.

One WUR frame may include N first time units with a preset length, lengths of first time units included in different WUR frames may be the same or different, where N is an integer greater than or equal to 1 (or N is a positive integer), and the first time unit may be used to transmit a wake-up signal. Step 602 may alternatively be described as follows: The network device sends the wake-up signal to the terminal in at least one first time unit in the WUR frame, and the terminal receives the wake-up signal from the network device in the at least one first time unit in the WUR frame. In addition to transmitting the wake-up signal, the first time domain resource may further be used to transmit another signal, for example, a synchronization signal and another signal transmitted on the second link (or the main link).

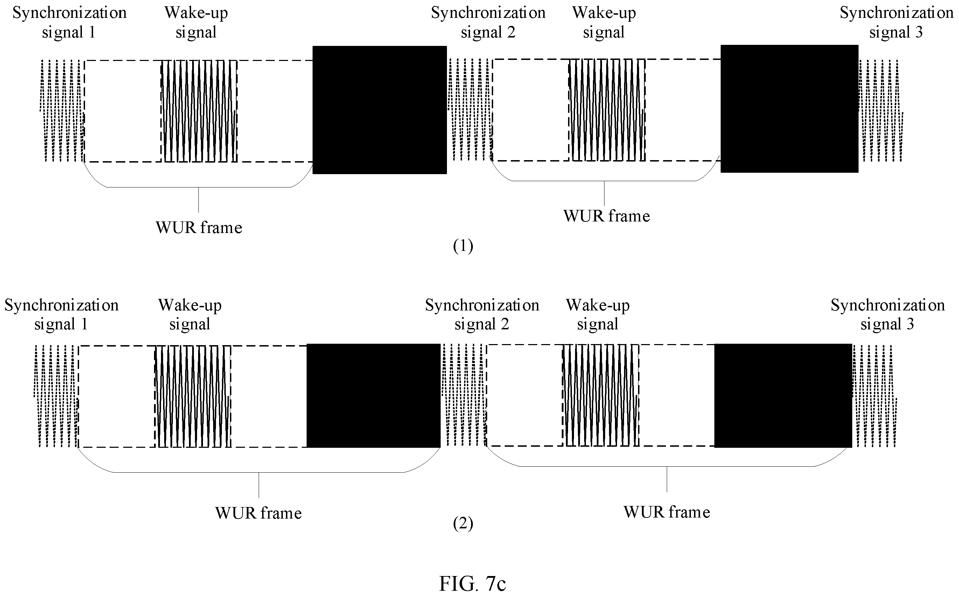

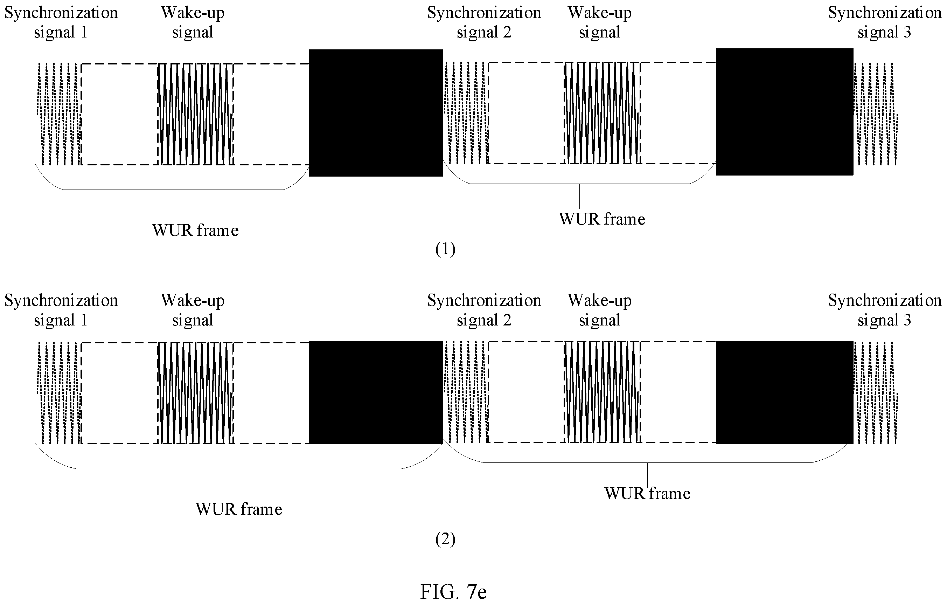

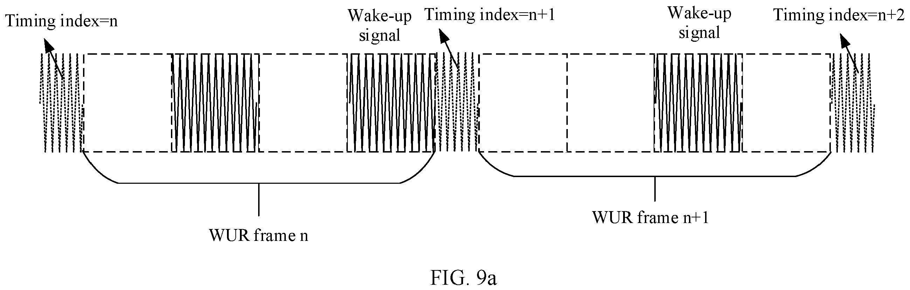

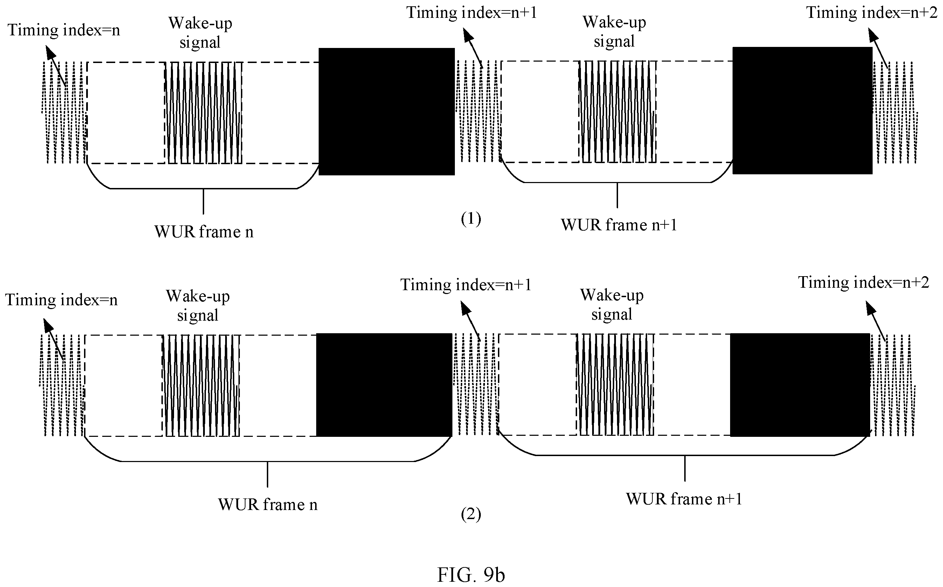

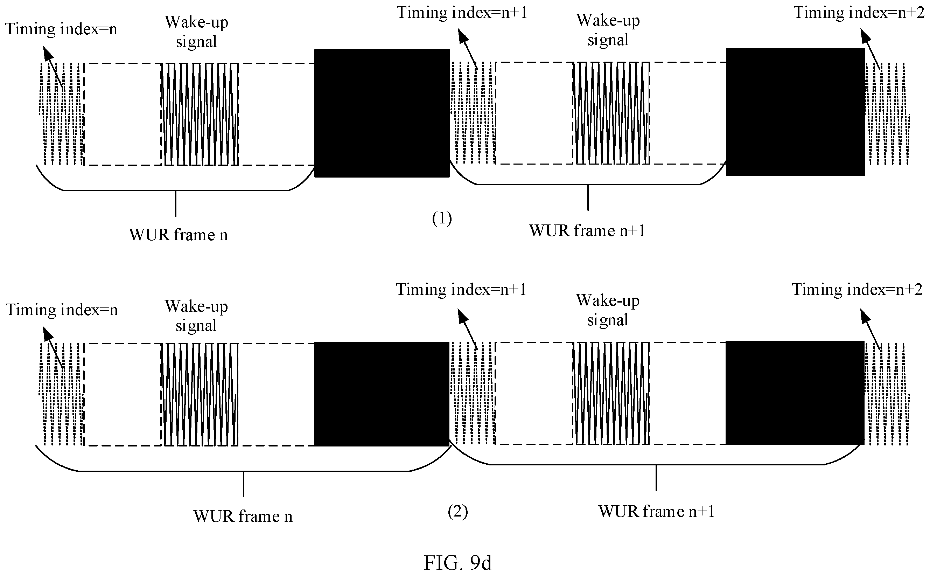

For example, it is assumed that the first time domain resource is a WUR frame. As shown in FIG. 7c, FIG. 7e, FIG. 9b, and FIG. 9d, a black box in the figures indicates a time domain resource used to transmit a signal on the main link. In an embodiment, a WUR frame format may be shown in (1) in FIG. 7c and (1) in FIG. 9b. A WUR frame includes a time domain resource of a wake-up signal, and the WUR frame does not include a time domain resource corresponding to a black box. In this case, the WUR frame may be used to transmit the wake-up signal, but cannot be used to transmit a signal on the main link. In another embodiment, as shown in (1) in FIG. 7e and (1) in FIG. 9d, a WUR frame includes a time domain resource of a synchronization signal and a time domain resource of a wake-up signal, and the WUR frame does not include a time domain resource corresponding to a black box. In this case, the WUR frame may be used to transmit the synchronization signal and the wake-up signal, but cannot be used to transmit a signal on the main link. In still another embodiment, a WUR frame format may alternatively be shown in (2) in FIG. 7c and (2) in FIG. 9b. A WUR frame includes a time domain resource of a wake-up signal and a time domain resource corresponding to a black box in the figures. In this case, the WUR frame may be used to transmit not only the wake-up signal but also a signal on the main link. In yet another embodiment, as shown in (2) in FIG. 7e and (2) in FIG. 9d, a WUR frame includes a time domain resource of a synchronization signal, a time domain resource of a wake-up signal, and a time domain resource corresponding to a black box in the figures. In this case, the WUR frame may be used to transmit not only the synchronization signal and the wake-up signal but also a signal on the main link. It should be understood that FIG. 7c, FIG. 7e, FIG. 9b, and FIG. 9d are examples of the accompanying drawings. A quantity of WUR frames, a length of a time domain resource, and the like shown in FIG. 7c, FIG. 7e, FIG. 9b, and FIG. 9d are not limited in this application.

Specifically, the network device may transmit the wake-up signal to the terminal through the WUR link, and the terminal may receive the wake-up signal from the network device through the WUR link or the first module. In this case, the terminal is in the first state or the first mode, and the terminal in the first state or the first mode receives the wake-up signal from the network device through the WUR link or the first module.

In embodiments of this application, the first time unit may be named a WUR slot (WUR slot), a WUR occasion (WUR occasion), a scheduling unit, or the like. The first time unit may include a plurality of symbols (or referred to as chips (chips)). That is, the first time unit may be understood as a time period including a plurality of time-consecutive symbols (or chips). One symbol may correspond to one coded bit, and the coded bit may be a bit obtained after original information is encoded. A length of the WUR frame and a length of the first time unit may be preconfigured, for example, prespecified in a protocol. A quantity N of first time units in one WUR frame may be determined by the network device, and indicated/configured by the network device to the terminal. Alternatively, a quantity N of first time units in one WUR frame may be prespecified in a protocol. A boundary location of the first time unit may be determined based on a time domain location of the synchronization signal. The length of the first time unit may be the same as or different from a length of the time domain resource of the synchronization signal. For example, the length of the time domain resource of the synchronization signal is less than the length of the first time unit.

According to the method shown in FIG. 6, a time domain resource used to transmit the wake-up signal, and a boundary location of the time domain resource may be defined. In this way, the terminal learns a start location of the wake-up signal and a time domain location for detecting/receiving the wake-up signal, thereby reducing a quantity of times the terminal decodes paging-related information (for example, a paging message) (that is, decoding is attempted only at the boundary location of the first time unit, instead of being attempted at any symbol location). This further reduces a false alarm probability of the terminal, and avoids a problem that the false alarm probability is high because the terminal attempts to perform decoding at any symbol location in an existing manner.

It is assumed that the first time domain resource is a WUR frame. Specifically, the WUR frame and the first time unit are designed below.

In a possible design, the WUR frame is used to transmit a wake-up signal, the WUR frame may include a time domain resource (or referred to as a time resource or the like) between adjacent synchronization signals, and a length of the WUR frame is equal to or less than a length of the time domain resource between the adjacent synchronization signals. For example, all or some time domain resources between an end location of the synchronization signal and a start location of an adjacent next synchronization signal are used as one WUR frame, or some or all time domain resources between an end location of the synchronization signal and a start location of an adjacent next synchronization signal are divided into a plurality of WUR frames. In this possible design, the WUR frame does not include a time domain resource of the synchronization signal, and the WUR frame includes one or more first time units. One first time unit may be used to transmit one wake-up signal. That is, one wake-up signal occupies one first time unit. Alternatively, a plurality of first time units may be used to transmit one wake-up signal. That is, one wake-up signal occupies a plurality of first time units.

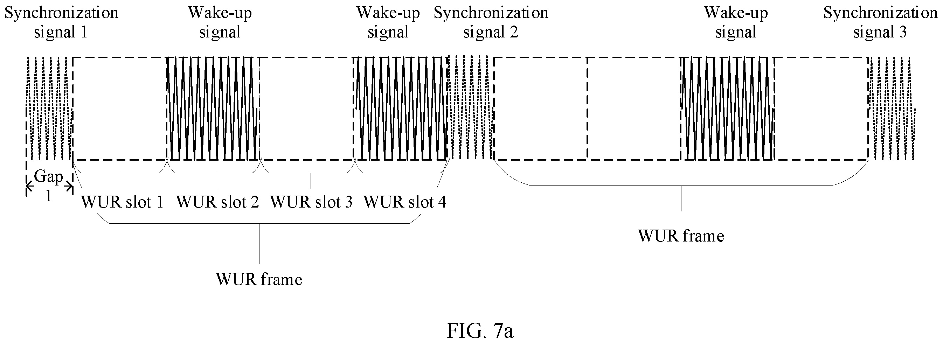

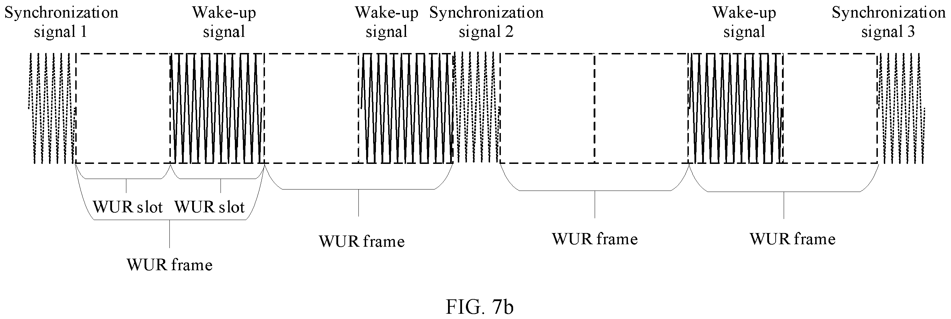

It is assumed that the first time unit is a WUR slot, and one WUR slot is used to transmit one wake-up signal. For example, as shown in FIG. 7a, all time domain resources between a synchronization signal 1 and a synchronization signal 2 are used as one WUR frame, and one WUR frame includes four WUR slots (as shown in dashed boxes in FIG. 7a). For another example, as shown in FIG. 7b, all time domain resources between a synchronization signal 1 and a synchronization signal 2 are divided into a plurality of WUR frames, and one WUR frame includes two WUR slots (as shown in dashed boxes in FIG. 7b). For another example, as shown in (1) in FIG. 7c, some time domain resources (time domain resources other than those in a black box) between a synchronization signal 1 and a synchronization signal 2 are used as one WUR frame, and one WUR frame may include three WUR slots (as shown in dashed boxes in (1) in FIG. 7c).

In another possible design, the WUR frame is used to transmit a synchronization signal and a wake-up signal. For example, in this possible design, a start part of the WUR frame is used to transmit the synchronization signal, and the wake-up signal is transmitted after the synchronization signal. The WUR frame may include a time domain resource used by a synchronization signal, and a time domain resource between the synchronization signal and a next adjacent synchronization signal. A length of the WUR frame is greater than a length of a time domain resource between adjacent synchronization signals. For example, a time domain resource between a start location of the synchronization signal and a start location of the next adjacent synchronization signal is used as a WUR frame. In this possible design, the WUR frame may include a time domain resource of the synchronization signal and one or more first time units. One first time unit may be used to transmit one wake-up signal. That is, one wake-up signal occupies one first time unit. Alternatively, a plurality of first time units may be used to transmit one wake-up signal. That is, one wake-up signal occupies a plurality of first time units.

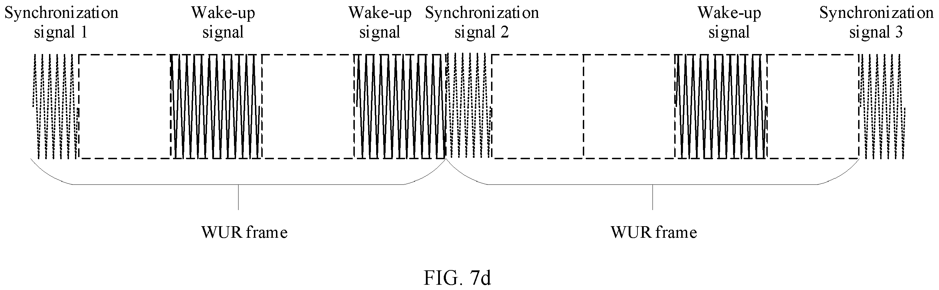

It is assumed that the first time unit is a WUR slot, and one WUR slot is used to transmit one wake-up signal. For example, as shown in FIG. 7d, a time domain resource of a synchronization signal 1, and a time domain resource between the synchronization signal 1 and a synchronization signal 2 are used as one WUR frame, and one WUR frame includes a time domain resource used to transmit a synchronization signal, and four WUR slots (as shown in dashed boxes in FIG. 7d). For another example, as shown in (1) in FIG. 7e, a time domain resource of a synchronization signal 1, and some time domain resources (time domain resources other than those in a black box) between the synchronization signal 1 and a synchronization signal 2 are used as one WUR frame, and one WUR frame includes a time domain resource used to transmit a synchronization signal, and three WUR slots (as shown in dashed boxes in (1) in FIG. 7e).

In still another possible design, the WUR frame is used to transmit a plurality (two or more) of synchronization signals and wake-up signals. For example, in this possible design, a start part of the WUR frame is used to transmit a synchronization signal, a wake-up signal is transmitted after the synchronization signal, another synchronization signal may be transmitted after the wake-up signal, another wake-up signal may be transmitted after the synchronization signal, and the like.

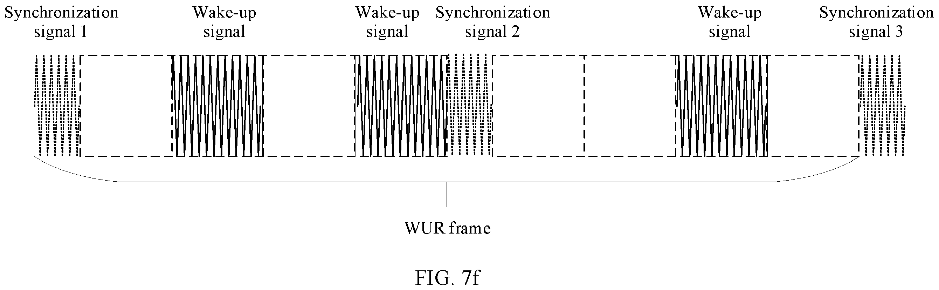

It is assumed that the first time unit is a WUR slot, and one WUR slot is used to transmit one wake-up signal. For example, as shown in FIG. 7f, time domain resources between a start location of a synchronization signal 1 and a start location of a synchronization signal 3 are considered as a WUR frame. The WUR frame includes time domain resources corresponding to the synchronization signal 1 and a synchronization signal 2, and eight WUR slots (as shown in dashed boxes in FIG. 7f). The first four WUR slots are time domain resources between the synchronization signal 1 and the synchronization signal 2, and the last four WUR slots are time domain resources after the synchronization signal 2 and before the synchronization signal 3.

It should be noted that, in a case in which the WUR frame is some of time domain resources between adjacent synchronization signals, the WUR frame, and other time domain resources between the adjacent synchronization signals may support the WUR link and the main link in transmitting signals through time division multiplexing (time division multiplexing, TDM). For example, a WUR frame between synchronization signals in (1) in FIG. 7c and (1) in FIG. 7e may be used to transmit a wake-up signal, and another time domain resource (a time domain resource corresponding to a black box) between the synchronization signals may be used to transmit another signal. The another signal is different from the wake-up signal, and the another signal may be transmitted on the main link. For example, the another signal may be a first signal sent by the network device. For another example, the another signal may be a second signal sent by another terminal to the network device.

It should be understood that the WUR frame described in embodiments of this application is not limited to being used to transmit a wake-up signal, or being used to transmit a synchronization signal and a wake-up signal, and may further be used to transmit another signal (for example, a first signal or a second signal), for example, may be further used to transmit a signal corresponding to the main link. That is, time domain resources used by signals transmitted on the WUR link and the main link are both included in the WUR frame. However, in a TDM scenario, a time domain resource used to transmit a signal on the main link cannot be used to transmit a signal (a wake-up signal, or a synchronization signal and a wake-up signal, or the like) on the WUR link. For example, this application is not limited to (1) in FIG. 7c and (1) in FIG. 7e, and a WUR frame does not include a time domain resource corresponding to a black box. Alternatively, it may be designed that a WUR frame includes a time domain resource corresponding to a black box shown in (2) in FIG. 7c and (2) in FIG. 7e. However, the time domain resource corresponding to the black box is not used by the WUR link, but is used on the main link to transmit the first signal, the second signal, and the like.

The first signal includes at least one of the following: a synchronization signal block (synchronization signal block, SSB), a physical downlink control channel (physical downlink control channel, PDCCH), a physical downlink shared channel (physical downlink shared channel, PDSCH), a channel state information reference signal (channel state information reference signal, CSI-RS), a phase tracking reference signal (phase tracking reference signal, PT-RS), a positioning reference signal (positioning reference signal, PRS), and a demodulation reference signal (demodulation reference signal, DMRS). The second signal includes at least one of the following: a DMRS, a physical uplink shared channel (physical uplink shared channel, PUSCH), a physical uplink control channel (physical uplink control channel, PUCCH), and a sounding reference signal (sounding reference signal, SRS).

It should be understood that, in embodiments of this application, in a possible design, WUR frame formats in each periodicity or in different periodicities may be set to be the same. One or more WUR frames may be included in one periodicity, one WUR frame includes one or more periodicities, or the like. This is not limited. It should be explained that the periodicity described in this application may be a sending periodicity of a synchronization signal. For example, a time period between a start location of a time domain resource of a synchronization signal and a start location of a time domain resource of a next adjacent synchronization signal may be referred to as a periodicity. The periodicity may be preconfigured, or prespecified in a protocol. For example, frame formats of WUR frames in the accompanying drawings shown in FIG. 7a to FIG. 7f are the same.

It should be understood that the frame format of the WUR frame in this application may include a length of the WUR frame, a quantity of first time units included in the WUR frame, a length of the first time unit included in the WUR frame, a length of a time domain resource of a synchronization signal included in the WUR frame, a type of a signal that may be carried in a time unit included in the WUR frame, and the like. That the WUR frame in this application includes a signal (a synchronization signal, a wake-up signal, or the like) may mean that the WUR frame includes a transmission resource of the signal, or the WUR frame includes a time domain resource that may be used to transmit the signal.

In another possible design, formats of different WUR frames may be set to be different. For example, for two WUR frames, lengths of the two WUR frames may be the same, but signals that may be carried in time units included in the two WUR frames are different. One WUR frame may include a time domain resource of a synchronization signal and a time domain resource of a wake-up signal, and the WUR frame may be used to carry/transmit at least one synchronization signal and at least one wake-up signal. The other WUR frame does not include a time domain resource of a synchronization signal, but includes a time domain resource of a wake-up signal, and the WUR frame is used to transmit at least one wake-up signal.

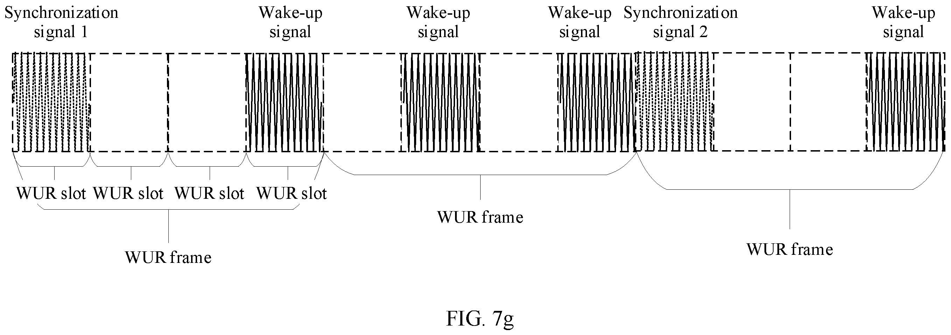

It is assumed that the first time unit is a WUR slot, and one WUR slot is used to transmit one wake-up signal. For example, as shown in FIG. 7g, a time domain resource between a start location of a synchronization signal 1 and a synchronization signal 2 is divided into two WUR frames: a WUR frame 1 and a WUR frame 2. The WUR frame 1 includes a time domain resource used to transmit the synchronization signal 1, and three WUR slots (as shown in dashed boxes in FIG. 7d), and a length of the time domain resource of the synchronization signal is equal to a length of a WUR slot. The WUR frame 2 includes four WUR slots used to transmit wake-up signals, and a length of each WUR frame is the same.

It should be understood that FIG. 7a to FIG. 7g are only examples of diagrams of WUR frame formats, and only WUR frames in several periodicities are shown. A quantity of synchronization signals, a quantity of WUR frames, and a quantity of time units included in a WUR frame that are included in FIG. 7a to FIG. 7g are not limited. For example, FIG. 7a to FIG. 7g may include more synchronization signals and WUR frames, one WUR frame may include more time units, and the like.

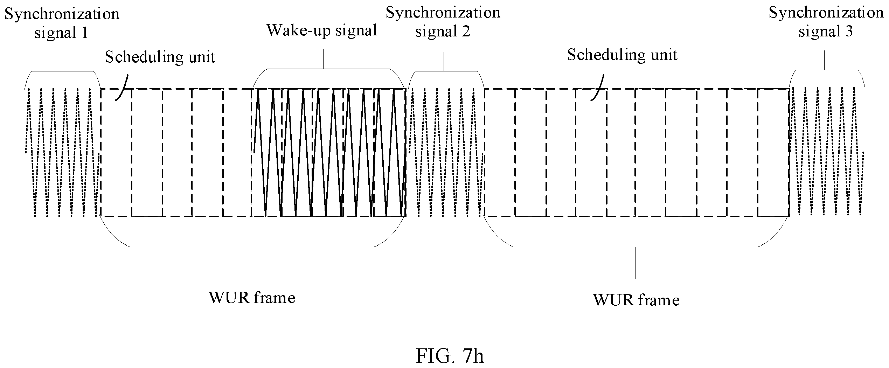

In addition, in the WUR frame formats shown in FIG. 7a to FIG. 7g, one wake-up signal occupies one first time unit. Different from the WUR frame formats shown in FIG. 7a to FIG. 7g, it may further be designed that one wake-up signal occupies a plurality of first time units. In this scenario, the first time unit may be named a scheduling unit. One scheduling unit may include a plurality of symbols (or chips), and one symbol corresponds to one coded bit. In other words, one symbol may be used to carry one coded bit. For example, as shown in FIG. 7h, one WUR frame includes 10 scheduling units (as shown in rectangular dashed boxes in FIG. 7h), and a wake-up signal may occupy five scheduling units. It should be understood that a design of a first time unit in the WUR frame format shown in FIG. 7h may be applied to other design formats (for example, the formats shown in FIG. 7a to FIG. 7g) of WUR frames. To be specific, a first time unit (for example, a WUR slot) in the formats shown in FIG. 7a to FIG. 7g may not be limited to the figures, or may alternatively be designed to that shown in FIG. 7h. This is not shown one by one herein.

In embodiments of this application, there is a specific time domain location relationship between the first time unit and the time domain location of the synchronization signal, and the boundary location of the first time unit may be determined based on the time domain location of the synchronization signal.

In a possible design, the boundary location of the first time unit is determined based on the start location of the synchronization signal. For example, it is assumed that the first time unit is a 1^{st} time unit in the first time domain resource, the start location of the first time unit is a location that is after the start location of the synchronization signal and that is at a first preset gap from the start location of the synchronization signal. A length of the first time unit may be equal to the first preset gap. The first preset gap may be preset.

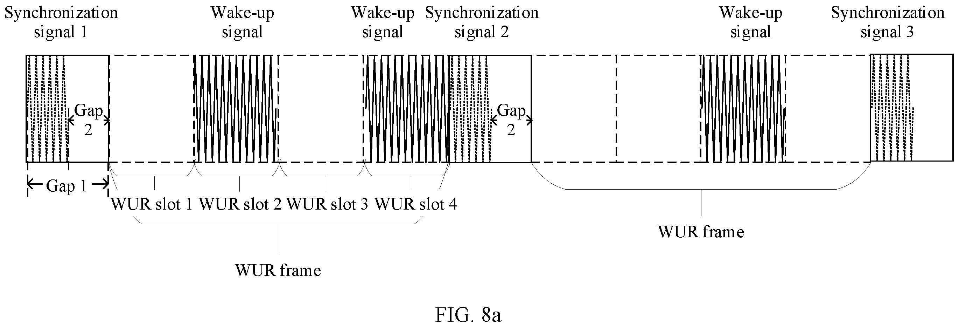

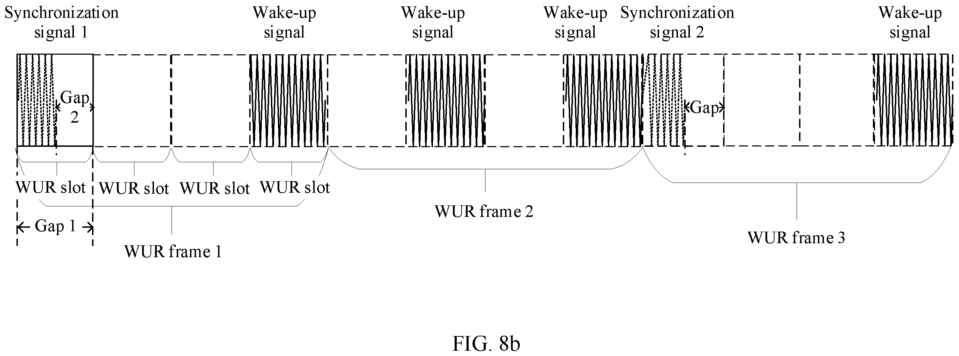

It is assumed that the first time unit is a WUR slot. For example, as shown in FIG. 8a, a WUR frame includes four WUR slots, a first WUR slot in the WUR frame is a WUR slot 1, and a start location of the WUR slot 1 is a location that is after a start location of a synchronization signal 1 and that is at a gap 1. For another example, as shown in FIG. 8b, each WUR frame includes four WUR slots. A first WUR slot in a WUR frame 1 is used to transmit a synchronization signal 1, and last three WUR slots are used to transmit a wake-up signal. A gap between a start location of the synchronization signal 1 and a start location of a second WUR slot in the WUR frame 1 is one WUR slot. All four WUR slots in a WUR frame 2 may be used to transmit a wake-up signal, and the WUR frame 2 does not have a synchronization signal, and is not used to transmit a synchronization signal.

In another possible design, the boundary location of the first time unit is determined based on the end location of the synchronization signal. For example, it is assumed that the first time unit is a 1^{st} time unit in the first time domain resource, and the start location of the first time unit is the end location of the synchronization signal, or the start location of the first time unit is a location that is after the end location of the synchronization signal and that is at a second preset gap from the end location of the synchronization signal. For example, a length of the first time unit may be equal to a sum of a length of the synchronization signal and a length of the second preset gap. The second preset gap may be preset.

It is assumed that the first time unit is a WUR slot. For example, as shown in FIG. 7a, a first WUR slot is a WUR slot 1, and a start location of the WUR slot 1 is an end location of a synchronization signal 1. In other words, the start location of the WUR slot 1 overlaps the end location of the synchronization signal 1. For another example, as shown in FIG. 8a, a WUR frame includes four WUR slots, a first WUR slot in the WUR frame is a WUR slot 1, and a start location of the WUR slot 1 is a location that is after an end location of the synchronization signal 1 and that is at a gap 2 from the end location of the synchronization signal 1. For another example, as shown in FIG. 8b, each WUR frame includes four WUR slots. A first WUR slot in a WUR frame 1 is used to transmit a synchronization signal 1, and last three WUR slots are used to transmit a wake-up signal. There is a gap 2 between an end location of the synchronization signal 1 and a start location of a second WUR slot in the WUR frame 1. A sum of the gap 2 and duration of the synchronization signal 1 is equal to a length of one WUR slot. All four WUR slots in a WUR frame 2 may be used to transmit a wake-up signal, and the WUR frame 2 does not have a synchronization signal, and is not used to transmit synchronization.

In embodiments of this application, there is also a specific location relationship between the first time domain resource and the time domain location of the synchronization signal. In a possible design, a start location of the first time domain resource is the end location of the synchronization signal. That is, the start location of the first time domain resource overlaps the end location of the synchronization signal. It is assumed that the first time domain resource is a WUR frame. For example, as shown in FIG. 7a, a start location of a first WUR frame starting from the left in FIG. 7a is an end location of a synchronization signal 1. Alternatively, a start location of the first time domain resource is a location that is after the end location of the synchronization signal and that is at a third preset gap from the end location of the synchronization signal. The third preset gap may be preset. It is assumed that the first time domain resource is a WUR frame. For example, as shown in FIG. 8a, a start location of a first WUR frame starting from the left in FIG. 8a is a location that is after an end location of a synchronization signal 1 and that is at a gap 2, and a start location of a second WUR frame is a location that is after an end location of a synchronization signal 2 and that is at a gap 2.

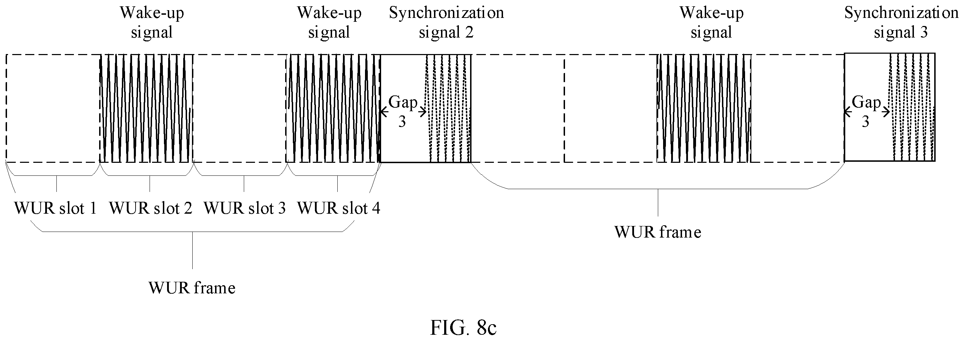

In another possible design, an end location of the first time domain resource is a start location of a next synchronization signal adjacent to the synchronization signal. It is assumed that the first time domain resource is a WUR frame. For example, as shown in FIG. 7a, an end location of a first WUR frame in FIG. 7a is a start location of a synchronization signal 2. Alternatively, an end location of the first time domain resource is a location that is before a next synchronization signal adjacent to the synchronization signal and that is at a fourth preset gap from a start location of the next synchronization signal adjacent to the synchronization signal. It is assumed that the first time domain resource is a WUR frame. For example, as shown in FIG. 8c, an end location of a first WUR frame starting from the left in FIG. 8c is a location that is before a start location of a synchronization signal 2 and that is at a gap 3, and an end location of a second WUR frame is a location that is before a start location of a synchronization signal 3 and that is at a gap 3.

It should be understood that the foregoing shows only the location relationship between the first time domain resource and the time domain location of the synchronization signal and the relationship between the first time unit and the time domain location of the synchronization signal in the WUR frame formats shown in FIG. 7a, FIG. 8a, and FIG. 8c. Similarly, in other WUR frame formats (for example, formats shown in FIG. 7b to FIG. 7h), the location relationship between the first time domain resource and the time domain location of the synchronization signal, and the location relationship between the first time unit and the time domain location of the synchronization signal may not be limited to those shown in the figures, or may be set with reference to the location relationships shown in FIG. 7a, FIG. 8a, and FIG. 8c. This is not shown one by one herein.

In embodiments of this application, the wake-up signal may at least indicate paging-related information. For example, the wake-up signal may indicate one or more terminals that need to receive paging. For example, the wake-up signal may include an identifier of the terminal that needs to receive paging, a group identifier of a group to which the terminal that needs to receive paging belongs, or the like. In addition, the wake-up signal may further include another information such as a system message.

Optionally, the terminal may determine, based on a local clock, a location of a first time unit occupied by the wake-up signal. That is, the terminal may calculate, based on a distance between the first time unit and the synchronization signal, the location of the first time unit occupied by the wake-up signal. For example, it is assumed that each first time unit includes 40 symbols, and a length of each symbol is 4 µs. The terminal may calculate time based on the local clock, and it is considered that a location of a next first time unit is reached at an interval of 160 µs. Alternatively, the wake-up signal may carry/include indication information. For example, the indication information may be carried/included in a start location of the wake-up signal. The indication information may indicate an index value of a first time unit occupied by the wake-up signal/in which the wake-up signal is located, or the indication information indicates an index value of a start time unit occupied by the wake-up signal/in which the wake-up signal is located. The start time unit may be a 1^{st} first time unit in the first time units occupied by the wake-up signal. In this way, the terminal determines/locates a location of the wake-up signal in a WUR frame based on the indication information, thereby improving wake-up signal detection accuracy.

In embodiments of this application, an index value of a time unit (for example, the index value of the first time unit or the index value of the start time unit) may be a number of the time unit in N first time units included in one WUR frame. Optionally, the N first time units are sequentially numbered in a time sequence, and numbers of the N first time units may be 0 to (N-1) or may be 1 to N. For example, as shown in FIG. 7h, one WUR frame includes 10 scheduling units: a scheduling unit 0 to a scheduling unit 9. A wake-up signal occupies the scheduling unit 5 to the scheduling unit 9. In this case, the wake-up signal may carry a start time unit: an index value 5 of the scheduling unit 5. The terminal learns, based on the index value 5 and a quantity of coded bits (that is, a length of the wake-up signal) corresponding to the wake-up signal, that the wake-up signal is located in the scheduling unit 5 to the scheduling unit 9. Further, the wake-up signal is detected/received on the scheduling unit 5 to the scheduling unit 9. It should be understood that the quantity of coded bits (that is, the length of the wake-up signal) corresponding to the wake-up signal may be predetermined, for example, may be preconfigured or predefined in a standard by the network device through the main link.

It may be learned from the foregoing that, in this application, the format of the WUR frame (that is, the first time domain resource used to transmit the wake-up signal) is designed, and the quantity of time units that may be used to transmit the wake-up signal, the location relationship between the synchronization signal and the boundary location of the time unit used to transmit the wake-up signal, and the like are specified in the WUR frame. In this way, after completing time synchronization based on the synchronization signal, the terminal can accurately locate a time unit in which a wake-up signal is transmitted, thereby detecting a wake-up signal in these time units, and avoiding false alarms.

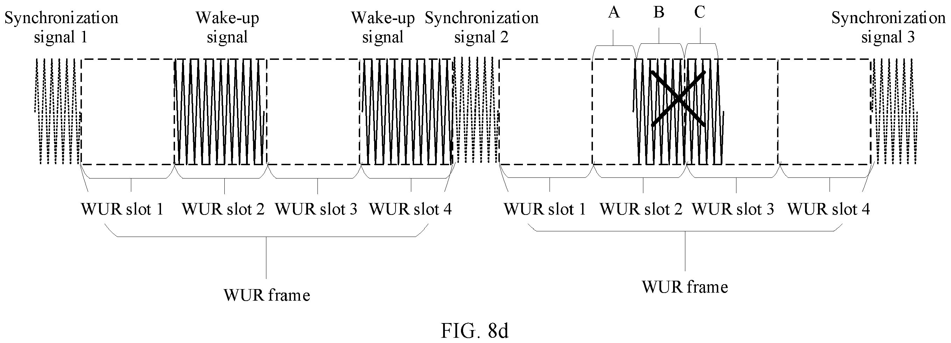

For example, it is assumed that one WUR frame is all time domain resources between adjacent synchronization signals, a first time unit is a WUR slot, and one WUR slot is used to transmit one wake-up signal. As shown in FIG. 8d, there is no case in which one wake-up signal is transmitted across two WUR slots. Therefore, when a wake-up signal includes an identifier of a terminal that needs to be woken up, assuming that a cell includes UE 1 and UE 2, an identifier of the UE 1 is AB, and an identifier of the UE 2 is BC, if a base station needs to wake up the UE 1 in the cell, the base station sends a wake-up signal "AB". For the UE 1 and the UE 2, based on the WUR frame format shown in this application, a received wake-up signal may be detected starting from a boundary of one WUR slot (for example, a WUR slot 2 in a second WUR frame in FIG. 8d) until all coded bits in the WUR slot are detected. Then, it is determined, based on a detection result, whether the identifier is the identifier of the terminal. If the identifier is the identifier of the terminal, the terminal is woken up. The UE 1 and the UE 2 do not continuously detect and obtain two coded bits "BX" starting from a middle location of the WUR slot (that is, a start location of a coded bit B in FIG. 8d), and do not mistakenly consider/detect a second coded bit "X" as a coded bit C when there is noise interference, which may cause the UE 2 to be woken up.

The foregoing describes the WUR frame that may be used to transmit a wake-up signal. Optionally, for different terminals, the terminal may be located in a same cell or different cells, and different time windows (windows) for receiving wake-up signals may be configured for the terminal, to ensure that time windows of different terminals in a same cell are staggered/not overlapped, or time windows of different terminals in different cells are staggered/overlapped. The time window may be a time period in which the terminal receives the wake-up signal. The time window may be some resources (for example, some first time units) in one WUR frame, or the time window is one or more WUR frames.

It should be understood that, in embodiments of this application, time windows for different terminals to receive wake-up signals may be independent of each other and not overlapped. Alternatively, time windows for different terminals to receive wake-up signals may be overlapped.

For example, different terminals are separately located in a cell 1 and a cell 2. A time window configured for a terminal in the cell 1 to receive a wake-up signal is a WUR slot 2 to a WUR slot 4 in a WUR frame 1 to a WUR frame 3. The terminal in the cell 1 may receive the wake-up signal in the WUR slot 2 to the WUR slot 4 in the WUR frame 1 to the WUR frame 3. A time window configured for a terminal in the cell 2 to receive a wake-up signal may be a WUR frame 6 to a WUR frame 9. That is, the time window includes all WUR slots in the WUR frame 6 to the WUR frame 9. The terminal in the cell 2 may receive the wake-up signal in all the WUR slots in the WUR frame 6 to the WUR frame 9. In this case, the time window of the terminal located in the cell 1 and the time window of the terminal located in the cell 2 are not overlapped and are independent of each other.

For another example, for UE 1, UE 2, and UE 3 in terminals located in a same cell, a time window "a WUR frame 0 to a WUR frame 3" is configured for the UE 1, a time window "a WUR frame 2 to a WUR frame 5" is configured for the UE 2, and a time window "a WUR frame 4 to a WUR frame 7" is configured for the UE 3. In this case, the time windows of the UE 1 and the UE 2 are overlapped, the time windows of the UE 2 and the UE 3 are overlapped, and the time windows of the UE 1 and the UE 3 are not overlapped, so that time windows of different terminals in the same cell overlap or are independent of each other.

For example, the network device may configure, for the terminal, a time window for receiving a wake-up signal. For example, when the terminal is in a connected state, the network device sends first configuration information to the terminal through the main link. The first configuration information may indicate a time window for receiving a wake-up signal by the terminal. For example, the first configuration information may include a frame number (or referred to as an index value) of a WUR frame in which the terminal receives the wake-up signal, an index value of a time unit in the WUR frame, and/or the like.

In embodiments of this application, the terminal may receive the wake-up signal within the time window in the following two working manners: Manner 1: A wake-up circuit is used to continuously receive a signal. That is, the wake-up circuit always receives the signal. After a WUR frame and a first time unit included in the WUR frame are defined, the wake-up circuit always maintains time synchronization by using the synchronization signal, but identifies/detects the wake-up signal only within the time window. Manner 2: A wake-up circuit is used to intermittently receive a signal. That is, the terminal opens/turns on the wake-up circuit only at a location near the time window to receive the signal, and turns off the wake-up circuit at another time, to further reduce power consumption of the terminal.

To enable Manner 2, the WUR link needs to provide system timing for the following reason: The terminal periodically and intermittently receives wake-up signals on the WUR link. For example, a wake-up signal is received once on the WUR link at an interval of Q synchronization signal periodicities, and Q is an integer greater than 1. In this case, the terminal needs to know a specific periodicity of the Q periodicities in which the wake-up signal received by the terminal is located. Otherwise, when the terminal uses Manner 2, after no wake-up signal is received for a period of time, because local clock precision is low, when the terminal turns on the wake-up circuit again to receive the wake-up signal, it is impossible to accurately know a specific periodicity in the Q periodicities, and whether a time window in which the terminal needs to receive the wake-up signal is reached. Therefore, after the terminal obtains the first configuration information, the terminal may obtain the system timing; and based on a system timing result and the first configuration information, determine a time location of a time window in which the terminal needs to receive the wake-up signal, and receive the wake-up signal within the time window.

The system timing described in embodiments of this application may mean that the terminal determines a specific WUR frame (namely, a first time domain resource) in which the terminal receives a signal (for example, a wake-up signal) in a large periodicity. The large periodicity may include a plurality of WUR frames. The large periodicity may be represented by an index range of a WUR frame. For example, the large periodicity may be [an index value of a start WUR frame, an index value of an end WUR frame] or an index value of a start WUR frame to an index value of an end WUR frame. A length of the large periodicity is equal to a length between the start WUR frame and the end WUR frame. The length of the large periodicity may be equal to a product of a quantity of WUR frames included in the large periodicity, and a length of one WUR frame. For example, when a value range of an index value of a WUR frame is 0 to 1023, a length of a large periodicity is a length of 1024 WUR frames. Specifically, a name and a length of the large periodicity may be set according to a requirement, and are not limited. The system timing result may include an index value/frame number of a WUR frame in which a signal is currently received. The receiving the wake-up signal within the time window based on a system timing result and the first configuration information includes: If the terminal learns, based on the system timing result, that a time window (for example, a WUR frame) in which the terminal needs to receive the wake-up signal is reached/is about to reach, the terminal is woken up to receive the wake-up signal within the time window.

For example, the terminal may obtain a timing index, and further determine system timing based on the timing index. The timing index may indicate an index value of a first time domain resource (for example, a WUR frame). For example, the first time domain resource is a WUR frame. In a possible design, the timing index includes an index value of the WUR frame (or referred to as a frame number of the WUR frame). That is, the timing index directly indicates the index value of the WUR frame. In another possible design, the timing index may include a parameter used to calculate an index value of the WUR frame. The index value of the WUR frame may be calculated based on the timing index. In this possible design, the timing index may indirectly indicate the index value of the WUR frame. In this application, the timing index is obtained in any one of the following manners.

Manner 1: The timing index is determined based on first information. For example, the first information includes the timing index.

In Manner 1, the first information may be carried in a synchronization signal. For example, a synchronization sequence corresponding to the synchronization signal is followed by first information of several bits, and the first information indicates the timing index. To be specific, in addition to a sequence used for a synchronization function, the synchronization signal further includes indication information (for example, the first information) used by the terminal to determine the system timing. In a case in which a WUR frame does not include a synchronization signal, the indication information may indicate which WUR frame is a WUR frame after the synchronization signal. In a case in which a WUR frame includes a synchronization signal, the indication information may indicate which WUR frame is a WUR frame in which the synchronization signal is located.

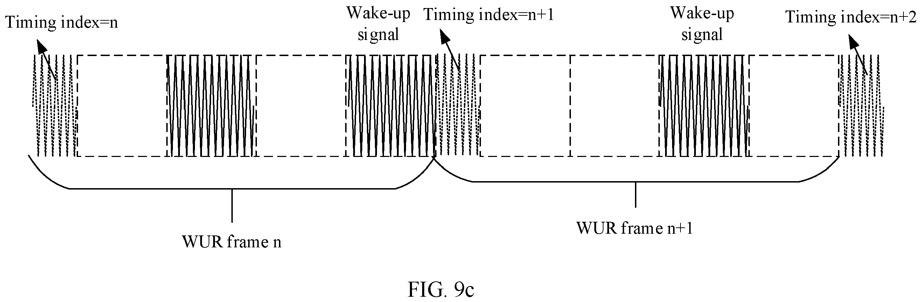

For example, as shown in FIG. 9a or (1) in FIG. 9b, a WUR frame includes a wake-up signal, and does not include a synchronization signal, and a WUR frame is after a synchronization signal. In this case, a synchronization signal may carry a timing index=n to indicate that a WUR frame after the synchronization signal is a WUR frame n, a synchronization signal carries a timing index=n+1 to indicate that a WUR frame after the synchronization signal is a WUR frame n+1, and a synchronization signal carries a timing index=n+2 to indicate that a WUR frame after the synchronization signal is a WUR frame n+2. For another example, as shown in FIG. 9c or (1) in FIG. 9d, a WUR frame includes a synchronization signal and a wake-up signal. A synchronization signal carries a timing index=n to indicate that a WUR frame in which the synchronization signal is currently located is a WUR frame n, a synchronization signal carries a timing index=n+1 to indicate that a WUR frame in which the synchronization signal is currently located is a WUR frame n+1, and a synchronization signal carries a timing index=n+2 to indicate that a WUR frame in which the synchronization signal is currently located is a WUR frame n+2.

It should be understood that this application is not limited to a time domain resource included in the WUR frame. In addition to the time domain resource used to transmit the signal on the WUR link, the WUR frame may further include a time domain resource used to transmit a signal on another link (for example, the main link). For example, the WUR frame is not limited to the time domain resource that does not include that corresponding to a black box shown in (1) in FIG. 9b and (1) in FIG. 9d. Alternatively, it may be designed that the WUR frame includes a time domain resource used to transmit a signal on another link. As shown in (2) in FIG. 9b and (2) in FIG. 9d, the WUR frame may further include a time domain resource corresponding to a black box in addition to the time domain resource of the wake-up signal, and the time domain resource corresponding to the black box is not used by the WUR link, but is used on the main link to transmit a signal (for example, the first signal and the second signal described in this application).

It should be understood that FIG. 9a to FIG. 9d are only examples of diagrams of WUR frame formats, and only WUR frames in several periodicities are shown. A quantity of synchronization signals, a quantity of WUR frames, and a quantity of time units included in a WUR frame that are included in FIG. 9a to FIG. 9d are not limited. For example, FIG. 9a to FIG. 9d may include more synchronization signals and WUR frames, one WUR frame may include more time units, and the like.

Manner 2: There is a mapping relationship between a timing index and a synchronization sequence of a synchronization signal, and the timing index is determined based on a mapping relationship and a synchronization sequence of the synchronization signal. After receiving the synchronization signal, the terminal may determine, in a blind detection manner, which synchronization sequence is used by the synchronization signal, search for the mapping relationship by using the synchronization sequence of the synchronization signal as an index, find a timing index corresponding to the synchronization sequence, and further obtain an index value of a WUR frame based on the timing index. For example, in a case in which the WUR frame does not include a synchronization signal, which WUR frame is a WUR frame after the synchronization signal may be determined based on the timing index obtained by searching for the mapping relationship. In a case in which the WUR frame includes a synchronization signal, which WUR frame is a WUR frame in which the synchronization signal is currently located may be determined based on the timing index determined based on the searched relationship.

The mapping relationship may be preset, for example, predefined in a standard or preset by the network device. The mapping relationship between the timing index and the synchronization sequence of the synchronization signal may be in a list form, or may be in an array form, which is not limited.

For example, the mapping relationship between the timing index and the synchronization sequence of the synchronization signal is in a list form. Table 1 below shows the mapping relationship. It may be learned from Table 1 that there are 15 synchronization sequences 0 to 15, one synchronization sequence corresponds to one timing index, there are 16 timing indexes in total, and a value range of the timing index is 0 to 15. It is assumed that a synchronization sequence of a synchronization signal received by the terminal is a synchronization sequence 1. The terminal may query Table 1 by using the synchronization sequence 1 as an index to obtain a timing index=1, and determine, based on the timing index=1, that the WUR frame after the synchronization signal is a WUR frame 1 or the WUR frame in which the synchronization signal is currently located is a WUR 1. It should be understood that Table 1 shows only an example. The mapping relationship between the timing index and the synchronization sequence of the synchronization signal in this application is not limited to the synchronization sequence and the timing index shown in Table 1, and may further include another timing sequence, a timing index, and the like.

**Table 1**

| Synchronization sequence | Timing index |
|---|---|
| Synchronization sequence 0 | Timing index=0 |
| Synchronization sequence 1 | Timing index=1 |
| Synchronization sequence 2 | Timing index=2 |
| ... | ... |
| Synchronization sequence 15 | Timing index=15 |

Manner 3: The timing index is determined based on second information and a synchronization sequence of the synchronization signal. Further, an index value of a WUR frame is obtained based on the timing index. For example, in a case in which the WUR frame does not include a synchronization signal, which WUR frame is a WUR frame after the synchronization signal may be determined based on the timing index obtained by searching for a mapping relationship. In a case in which the WUR frame includes a synchronization signal, which WUR frame is a WUR frame in which the synchronization signal is currently located may be determined based on the timing index determined based on a searched relationship.

Manner 3 may be understood as a combination of Manner 1 and Manner 2, and may be understood as jointly indicating the timing index by using the indication information carried in the synchronization signal and the synchronization sequence of the synchronization signal. For example, that the timing index is determined based on second information and a synchronization sequence of the synchronization signal may include: The timing index is determined based on M1 information bits and M2 information bits. The M1 information bits are carried in the synchronization signal. The second information includes the M1 information bits. There is a mapping relationship between the M2 information bits and the synchronization sequence of the synchronization signal. The M2 information bits are determined based on the synchronization sequence of the synchronization signal. M1 and M2 are positive integers. Specific values of M1 and M2 may be preconfigured, for example, prespecified in a protocol or configured by the network device.

For example, it is assumed that a value of the timing index is 0 to 31. If Manner 1 is used for the 32 timing indexes, six bits are required for indication. For example, if the timing index is 4, six bits "000100" are required for indication. For another example, if the timing index is 15, six bits "001111" are required for indication. However, in Manner 3, five bits in the six bits are carried in the synchronization signal. That is, the second information includes five bits, and M1 is 5. A value of the remaining one bit may be represented by using two synchronization sequences. That is, M2 is 1. For example, if the timing index is 4, five low-order bits "00100" in the six bits "000100" indicating the timing index may be carried in the synchronization signal, and the remaining high-order bit "0" may be indicated by one of two synchronization sequences. For example, in the two synchronization sequences, one synchronization sequence indicates 0, and the other synchronization sequence indicates 1. In this way, the five bits in the synchronization sequence and one bit indicated by the synchronization sequence are combined together to indicate the timing index. Alternatively, four low-order bits "0100" in the six bits "000100" indicating the timing index are carried in the synchronization signal (that is, the second information includes four bits, and M1 is 4), and the remaining high-order bits "00" may be indicated by one of four synchronization sequences. That is, M2 is 2. For example, the four synchronization sequences respectively correspond to or indicate 00, 01, 10, and 11, and a first synchronization sequence may indicate the remaining high-order bits "00". In this way, the four bits in the synchronization sequence and the two bits indicated by the synchronization sequence are combined together to indicate the timing index.

The timing index is indicated in combination by carrying the low-order bits of the timing index in the synchronization signal and forming a mapping relationship between the high-order bits and the synchronization sequence of the synchronization signal. Optionally, the timing index may be indicated in combination by carrying the high-order bits of the timing index in the synchronization signal and forming a mapping relationship between the low-order bits and the synchronization sequence of the synchronization signal. For example, if the timing index is 4, five high-order bits "00010" in the six bits "000100" indicating the timing index may be carried in the synchronization signal, and the remaining high-order bit "0" may be indicated by one of two synchronization sequences. For example, in the two synchronization sequences, one synchronization sequence indicates 0, and the other synchronization sequence indicates 1. In this way, the five bits in the synchronization sequence and one bit indicated by the synchronization sequence are combined together to indicate the timing index. Alternatively, four high-order bits "0001" in the six bits "000100" indicating the timing index are carried in the synchronization signal, and the remaining low-order bits "00" may be indicated by one of four synchronization sequences. For example, the four synchronization sequences respectively correspond to or indicate 00, 01, 10, and 11, and a first synchronization sequence may indicate the remaining low-order bits "00". In this way, the four bits in the synchronization sequence and the two bits indicated by the synchronization sequence are combined together to indicate the timing index.

In this way, the terminal may determine a time window based on the timing index and the first configuration information, and be woken up in advance before the time window, to prepare for receiving the wake-up signal within the time window, and ensure normal receiving of the wake-up signal. For example, the network device indicates UE to receive a wake-up signal in a WUR frame whose timing index is 10. After the UE receives the wake-up signal in a WUR frame whose timing index is 10, the UE may stop receiving the signal through the wake-up circuit, and enter a sleep state. However, a local clock of the UE is still running, and the UE may determine, based on the local clock, a location at which the WUR frame whose timing index is 10 appears. Due to limited precision of the local clock, the UE can determine only an approximate location of the WUR frame whose timing index is 10. In this case, the UE may be woken up before the approximate location at which the WUR frame whose timing index is 10 appears, and receive a synchronization signal. Based on the timing index indicated by the newly received synchronization signal, the UE may know an exact location at which a next WUR frame whose timing index is 10 appears, receive a wake-up signal in the WUR frame whose timing index is 10, and further detect whether the received wake-up signal is related to the UE.

Optionally, in the method shown in FIG. 6, based on the following two reasons, the WUR link between the network device and the terminal supports a plurality of data rates. That is, the wake-up signal may be transmitted on the WUR link by using the plurality of data rates.

Reason 1: A channel status between the terminal and the network device is good or bad. When the channel status between the terminal and the network device is bad, for example, a low signal-to-noise ratio (signal noise ratio, SNR), a method of reducing a data rate of a wake-up signal may be used to improve robustness of the WUR link. Reducing the data rate of the wake-up signal is equivalent to increasing a length of a time unit occupied by the wake-up signal, and more time domain diversity may be obtained. Therefore, reducing the data rate of the wake-up signal may improve robustness of the WUR link. However, when the channel status between the terminal and the network device is good, the data rate of the wake-up signal does not need to be reduced, and a preconfigured data rate, a high data rate, or the like is used.

Reason 2: Arrival time of a wake-up signal of each terminal is random. In a period of time, a quantity of wake-up signals that need to be sent through the WUR link may be more or less. To ensure that a terminal at a cell edge can also correctly receive a wake-up signal, optionally, the wake-up signal is configured to use a low data rate. However, the wake-up signal with the low data rate occupies a large quantity of air interface resources (for example, a time domain resource). When the quantity of wake-up signals that need to be sent is large, using a low data rate may cause insufficient system capacity. In this case, it may be considered that the wake-up signals are sent in a high data rate manner, to improve a system capacity in short time. When the quantity of wake-up signals that need to be sent is not large/is small, a low data rate or the like is used, to ensure that the terminal at the cell edge can also correctly receive the wake-up signal.

In embodiments of this application, the data rate may be a ratio of a data amount of original information carried in a signal (for example, a wake-up signal) transmitted on the WUR to a quantity of coded bits corresponding to the signal. It is assumed that a data amount of a wake-up signal is 20 bits. If the signal is encoded as 40 bits, a data rate of the wake-up signal is 20/40=0.5. If the signal is encoded as 80 bits, a data rate of the wake-up signal is 20/80=0.25. That is, for same original information, if a data rate of a wake-up signal corresponding to the original information is lower, a quantity of coded bits corresponding to the wake-up signal is larger. On the contrary, if a data rate is higher, a quantity of coded bits corresponding to the wake-up signal is smaller. One coded bit occupies one symbol, and a plurality of symbols form one time unit in one WUR frame. Therefore, a lower data rate indicates a longer total length of a time unit occupied by the wake-up signal, and a larger quantity of time units occupied by the wake-up signal. On the contrary, a higher data rate indicates a shorter total length of a time unit occupied by the wake-up signal, and a smaller quantity of time units occupied by the wake-up signal. For example, a wake-up signal includes a first wake-up signal and a second wake-up signal. When a data rate of the first wake-up signal is lower than a data rate of the second wake-up signal, a total length of a time unit occupied by the first wake-up signal is greater than a total length of a time unit occupied by the second wake-up signal, and a quantity of time units occupied by the first wake-up signal is greater than a quantity of time units occupied by the second wake-up signal. It should be understood that the total length of the time unit occupied by the wake-up signal in this application may be understood as a length of the wake-up signal.

In a possible design, a data rate of a wake-up signal is determined based on a synchronization signal. For example, a length of a synchronization signal may indicate a data rate of a wake-up signal in a WUR frame after the synchronization signal. A shorter length of the synchronization signal indicates a higher data rate of the wake-up signal in the WUR frame after the synchronization signal, and a longer length of the wake-up signal. On the contrary, a longer length of the synchronization signal indicates a lower data rate of the wake-up signal in the WUR frame after the synchronization signal, and a shorter length of the wake-up signal.

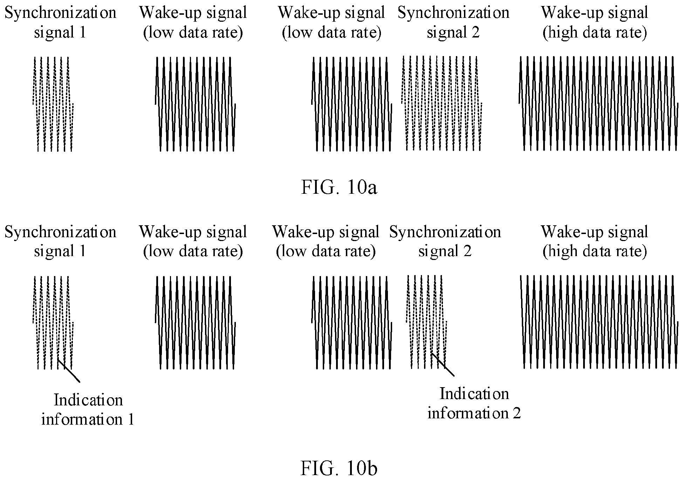

As shown in FIG. 10a, a length of a synchronization signal 1 is less than a length of a synchronization signal 2. Alength of a wake-up signal after the synchronization signal 1 and before the synchronization signal 2 is less than a length of a wake-up signal after the synchronization signal 2. The wake-up signal after the synchronization signal 1 and before the synchronization signal 2 is a wake-up signal with a high data rate. The wake-up signal after the synchronization signal 2 is a wake-up signal with a low data rate.

In embodiments of this application, the length of the wake-up signal may be represented by a quantity of coded bits after the wake-up signal is encoded. For example, the length of the wake-up signal may be equal to the quantity of coded bits of the wake-up signal. A larger quantity of coded bits of the wake-up signal indicates a longer length of the wake-up signal. On the contrary, a smaller quantity of coded bits of the wake-up signal indicates a shorter wake-up signal.

In another possible design, indication information may be carried in the synchronization signal. The indication information may be referred to as data rate indication information, and the indication information may indicate a data rate of a wake-up signal in a WUR frame after the synchronization signal. It should be understood that, in this possible design, lengths of synchronization signals in each periodicity may be the same.

For example, as shown in FIG. 10b, a synchronization signal 1 carries indication information 1, and the indication information 1 indicates that a data rate of a wake-up signal after the synchronization signal 1 has a high data rate. A synchronization signal 2 carries indication information 2, and the indication information 2 indicates that a data rate of a wake-up signal after the synchronization signal 2 has a low data rate. In addition, a length of the synchronization signal 1 is the same as a length of the synchronization signal 2.

Wake-up signals with different data rates have different lengths. To meet the WUR frame format requirement, in a possible design, in a case in which a wake-up signal occupies one first time unit, a length of a first time unit may be designed based on a length of the wake-up signal. If a data rate of a wake-up signal in a WUR frame is high, a length of a first time unit in the WUR frame is designed to be short. If a data rate of a wake-up signal in a WUR frame is low, a length of a first time unit in the WUR frame is designed to be long. That is, time lengths in WUR frames with different data rates are different.

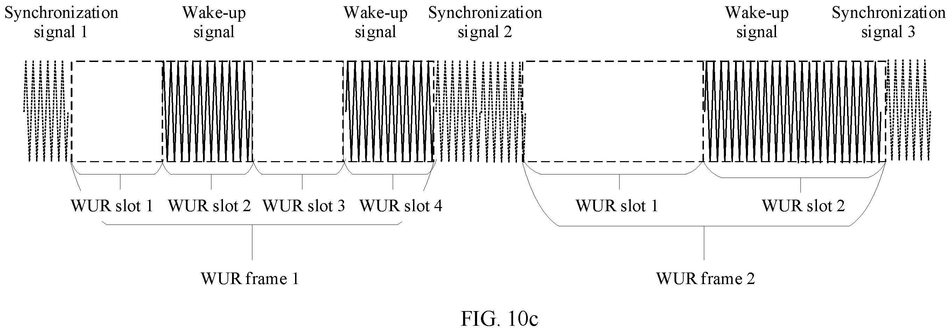

It is assumed that the first time unit is a WUR slot. For example, as shown in FIG. 10c, a length of a synchronization signal 1 is less than a length of a synchronization signal 2. It may be learned from FIG. 10c that a wake-up signal after the synchronization signal 1 and before the synchronization signal 2 is a wake-up signal with a high data rate, a WUR frame 1 after the synchronization signal 1 has N=4 WUR slots, and one wake-up signal occupies one WUR slot. A wake-up signal after the synchronization signal 2 is a wake-up signal with a low data rate, a WUR frame 2 after the synchronization signal 2 has N=2 WUR slots, one wake-up signal occupies one WUR slot, and a length of a WUR slot in the WUR frame 1 is less than a length of a WUR slot in the WUR frame 2.

In this possible design, lengths of synchronization signals in different periodicities are different, and a data rate of a wake-up signal after the synchronization signal may be indicated by the different lengths of the synchronization signals. However, because a boundary location of the first time unit in the WUR frame is determined based on a time domain location (for example, a start location and/or an end location) of the synchronization signal, the different lengths of the synchronization signal may cause a change in the boundary location of the first time unit. The change in the boundary location of the first time unit further causes the terminal to be unable to determine a time location of a boundary of each first time unit. Consequently, the terminal cannot correctly receive the wake-up signal. To avoid the change in the boundary location of the first time unit, it may be designed that a length between a start location of a synchronization signal and a start location of a first time unit is fixed/the same, to ensure that a boundary location of the first time unit is fixed.

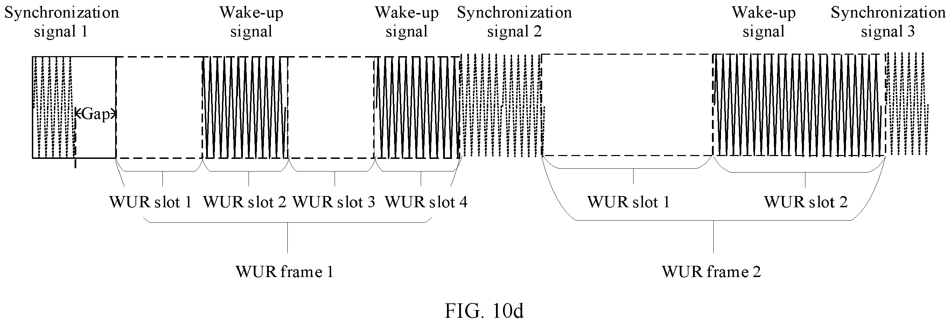

For example, as shown in FIG. 10d, when a synchronization signal 1 is used, there is a gap between an end location of the synchronization signal 1 and a start location of a WUR slot 1 in a WUR frame. When a synchronization signal 2 is used, there is no gap between an end location of the synchronization signal 2 and a start location of a WUR slot 1 in a WUR frame 2. In this case, a length of the synchronization signal 1 plus a length of the gap is equal to a length of the synchronization signal 2, and an end location of the length is a boundary location of a WUR slot, to ensure that a boundary location of a WUR slot in each periodicity is fixed. Optionally, in this case, regardless of whether the synchronization signal 1 or the synchronization signal 2 is used, lengths of time domain resources occupied by all the synchronization signals are the same, for example, may be a length of one WUR slot included in a WUR frame 1. In this way, a structure of the WUR link may be neater, and this helps the network device plan a signal transmission location.

In still another possible design, a length of a first time unit may be set to a fixed length value, lengths of first time units included in different WUR frames are the same, and lengths of a plurality of first time units in a same WUR frame are the same. A quantity of time units occupied by a wake-up signal with a high data rate is less than a quantity of time units occupied by a wake-up signal with a low data rate.

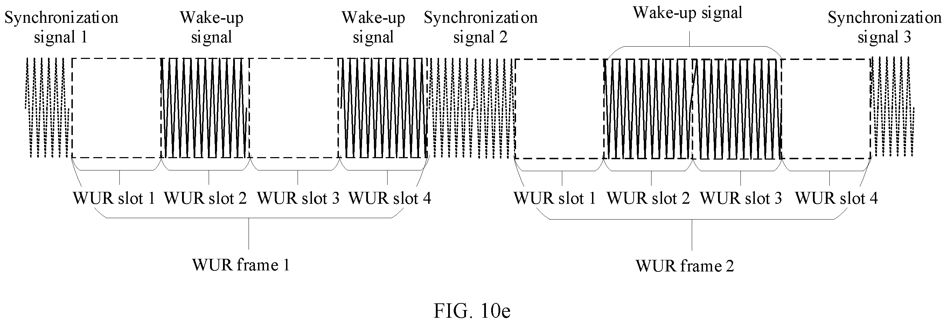

It is assumed that the first time unit is a WUR slot. As shown in FIG. 10e, a synchronization signal 1 corresponds to a high data rate, and a synchronization signal 2 corresponds to a low data rate. It may be learned from FIG. 10e that a wake-up signal after the synchronization signal 1 has a high data rate, a WUR frame 1 after the synchronization signal 1 has N=4 WUR slots, and one wake-up signal occupies one of the WUR slots. A wake-up signal after the synchronization signal 2 has a low data rate, a WUR frame 2 after the synchronization signal 2 has N=4 WUR slots, and the wake-up signal occupies two of the WUR slots: a WUR slot 2 and a WUR slot 3. Lengths of WUR slots in different WUR frames are the same, and a quantity of WUR slots occupied by the wake-up signal after the synchronization signal 2 is greater than a quantity of WUR slots occupied by the wake-up signal after the synchronization signal 1.

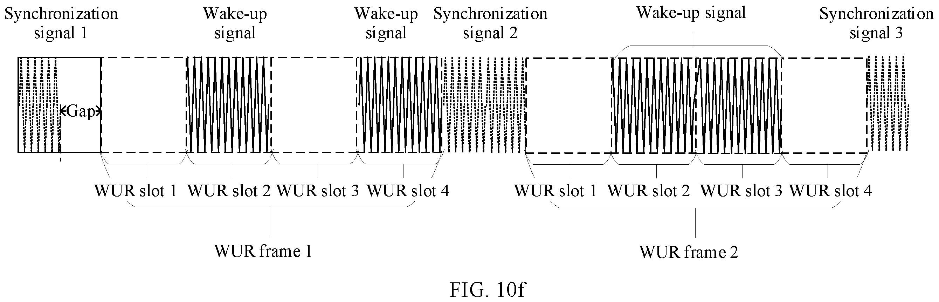

In this possible design, lengths of synchronization signals in different periodicities may be the same or may be different. When lengths of synchronization signals in different periodicities are different, it may be designed that a length between a start location of a synchronization signal and a start location of a first time unit is fixed/the same, to ensure that a boundary location of the first time unit is fixed. For example, as shown in FIG. 10f, when a synchronization signal 1 is used, there is a gap between an end location of the synchronization signal 1 and a start location of a WUR slot 1 in a WUR frame. When a synchronization signal 2 is used, there is no gap between an end location of the synchronization signal 2 and a start location of the WUR slot 1 in a WUR frame 1. In this case, a length of the synchronization signal 1 plus a length of the gap is equal to a length of the synchronization signal 2, and an end location of the length is a boundary location of a WUR slot, to ensure that a boundary location of a WUR slot in each periodicity is fixed.

It should be understood that FIG. 10a to FIG. 10f are only examples of the accompanying drawings, and only WUR frames in several periodicities are shown. A quantity of synchronization signals, a quantity of WUR frames, and a quantity of time units included in a WUR frame that are included in FIG. 10a to FIG. 10f are not limited. For example, FIG. 10a to FIG. 10f may include more synchronization signals and WUR frames, one WUR frame may include more time units, and the like. In addition, WUR frame formats shown in FIG. 10a to FIG. 10f include a wake-up signal, but do not include a synchronization signal. Different from the WUR frame formats shown in FIG. 10a to FIG. 10f, it may alternatively be designed that the WUR frames shown in FIG. 10a to FIG. 10f include a synchronization signal and a wake-up signal. Details are not shown herein.

Optionally, in embodiments of this application, to improve resource utilization, a first frequency domain resource corresponding to the WUR link may be configured/designed to be the same as a second frequency domain resource corresponding to the main link, and a time domain resource corresponding to the WUR link is different from a time domain resource corresponding to the main link. For example, the WUR link corresponds to the first time domain resource (that is, the WUR frame), and the main link corresponds to the second time domain resource. In this way, TDM transmission may be implemented, and resource utilization is improved. For example, as shown in FIG. 7c, FIG. 7e, and FIG. 9b, a time domain resource between adjacent synchronization signals includes a first time domain resource and a second time domain resource. The first time domain resource is a WUR frame used to transmit a wake-up signal. The second time domain resource is a time domain resource shown in a black box in FIG. 7c, FIG. 7e, and FIG. 9b, and the second time domain resource may be used to transmit a signal on the main link, to implement TDM transmission.

In a TDM transmission scenario, to reduce mutual interference between a signal on the WUR link and a signal on the main link, time alignment between the signal on the WUR link and the signal on the main link may be designed/configured. To implement time alignment between the signal on the WUR link and the signal on the main link, when a WUR frame on the WUR link is designed, a length of a first time unit included in the WUR frame is configured to be greater than a length of a slot in a frame on the main link. For example, the length of the first time unit may be set to an integer multiple of the length of the slot included in the second time domain resource corresponding to the main link. In this way, it may be ensured that a boundary of each first time unit is definitely a slot boundary. Therefore, the boundaries are aligned. Further, in a case in which the boundaries are aligned, each time one first time unit is sent, the network device only needs to ensure that a signal (for example, an NR signal) is not sent in a slot that overlaps the first time unit, to avoid the following problem: In a case in which the boundaries are not aligned, a signal transmitted in the first time unit and a signal transmitted in the slot may affect each other, which may affect normal communication.

For example, in an NR system, a frame transmitted on the main link includes a plurality of slots (slots), and each slot includes 14 or 12 symbols. In the WUR link, regardless of whether there is a synchronization signal or a paging-related wake-up signal, a quantity of coded bits carried in the synchronization signal or the paging-related wake-up signal is greater than 14 or 12. Because one coded bit corresponds to one symbol, a length of the wake-up signal is usually greater than 14 or 12 symbols. Therefore, a length of a WUR signal (for example, a synchronization signal or a wake-up signal) on the WUR link may be set to be longer than a length of a slot on the main link. In this case, when the WUR link is aligned with a signal boundary of the NR system, the length of the first time unit in the WUR frame may be an integer multiple of the slot length of the NR system, thereby reducing interference between a signal on the WUR link and a signal of the NR system.

Optionally, in embodiments of this application, a plurality of terminals and/or cells may share a synchronization signal sending location, which may cause interference. To avoid interference between different terminals and/or cells, the method may further include: The terminal receives second configuration information sent by the network device. For example, the terminal may receive the second configuration information from the network device through the main link. The second configuration information is used to configure a reserved resource, and the synchronization signal cannot be sent on the reserved resource. In this way, the terminal does not send a synchronization signal on the reserved resource based on the second configuration information.

In embodiments of this application, the reserved resource may be included in candidate sending locations of the synchronization signal, and the reserved resource is some candidate sending locations in the candidate sending locations of the synchronization signal. For example, the reserved resource may be candidate sending locations shared by a plurality of cells in the candidate sending locations. This means that some locations in the candidate sending locations of the synchronization signal are configured to be unavailable for the terminal to send the synchronization signal. Specifically, the candidate sending location of the synchronization signal is determined based on a sending periodicity of the synchronization signal. For example, the candidate sending location of the synchronization signal may be a location corresponding to the sending periodicity of the synchronization signal, and a length between adj acent candidate sending locations is one sending periodicity.

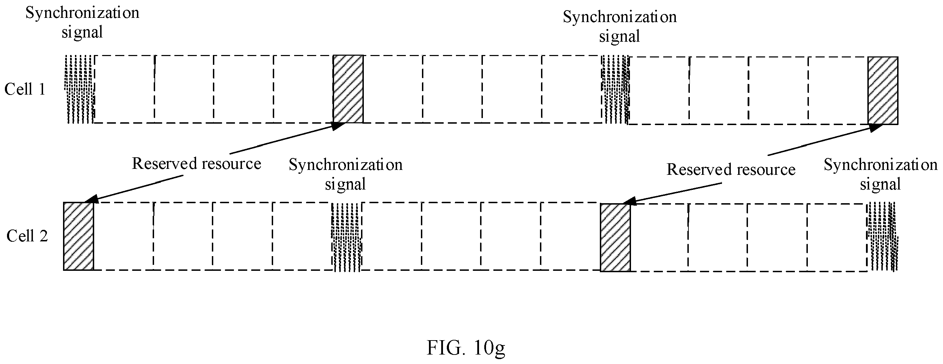

For example, as shown in FIG. 10g, it is assumed that WUR links are deployed in both neighboring cells (a cell 1 and a cell 2). If time domain resources of the WUR links in the two cells are overlapped, for example, synchronization signal sending locations are overlapped, WUR signals (for example, synchronization signals) of the two cells may interfere with each other. To avoid interference, the WUR signals of the neighboring cells need to be sent in a TDM manner. That is, it is better to send the WUR signals of the neighboring cells at different time locations. As shown in FIG. 10g, some synchronization signal sending locations in the cell 1 and the cell 2 are used as reserved resources, and a synchronization signal is not transmitted on the reserved resources. In this way, locations at which a synchronization signal can be sent are not overlapped, thereby avoiding inter-cell interference.

The foregoing mainly describes the solutions provided in embodiments of this application from a perspective of an interaction between nodes. It may be understood that, to implement the foregoing functions, each node such as the terminal or the network device includes a corresponding hardware structure and/or software module for performing each of the functions. A person of ordinary skill in the art should easily be aware that, with reference to algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A skilled person may use different methods to implement the described functions for each particular application, but it should not be considered that the implementation goes beyond the scope of this application.

In embodiments of this application, grouping of functional modules may be performed on the terminal, the network device, and the like based on the foregoing method examples. For example, grouping of various functional modules may be performed based on corresponding functions, or two or more functions may be integrated into one processing module. The integrated module may be implemented in a form of hardware, or may be implemented in a form of a software functional module. It should be noted that module grouping is an example and is merely logical function grouping in embodiments of this application. During actual implementation, another grouping manner may be used.

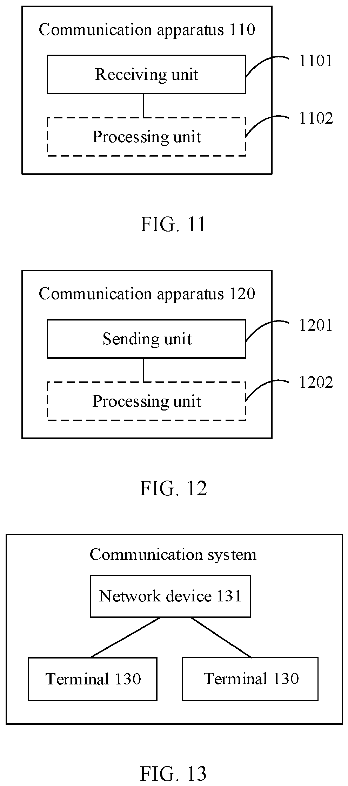

FIG. 11 is a diagram of a structure of a communication apparatus 110. The communication apparatus 110 may be a terminal, a chip in a terminal, or a system on chip. The communication apparatus 110 may be configured to perform a function of the terminal in the foregoing embodiments. In a possible implementation, the communication apparatus 110 shown in FIG. 11 includes a receiving unit 1101, and further includes a processing unit 1102.

The receiving unit 1101 is configured to: receive a synchronization signal from a network device; and receive, on a first time domain resource, a wake-up signal from the network device. The first time domain resource includes N first time units with a preset length, one wake-up signal occupies at least one of the N first time units with the preset length, N is a positive integer, a boundary location of the first time unit is determined based on a time domain location of the synchronization signal, and the wake-up signal indicates at least paging-related information.

Specifically, the foregoing related descriptions of the first time domain resource and the first time unit, and all related content of the steps in the method embodiments shown in FIG. 6 may be referenced to function descriptions of corresponding functional modules. Details are not described herein again. The communication apparatus 110 is configured to perform a function of the terminal in the wake-up signal sending method shown in FIG. 6, and therefore may achieve same effects as the foregoing wake-up signal sending method.

In still another implementation, the communication apparatus 110 shown in FIG. 11 includes a processing module and a communication module. The processing module is configured to control and manage an action of the communication apparatus 110. For example, the processing module may integrate a function of the processing unit 1102. The communication module may integrate a function of the receiving unit 1101, and may be configured to support the communication apparatus 110 in performing steps 601 and 602 and communicating with another network entity, for example, communicating with a functional module or a network entity shown in FIG. 4. The communication apparatus 110 may further include a storage module, configured to store program code and data of the communication apparatus 110.

The processing module may be a processor or a controller. The processor may implement or execute various example logical blocks, modules, and circuits described with reference to content disclosed in this application. The processor may alternatively be a combination for implementing a computing function, for example, a combination of one or more microprocessors, or a combination of a DSP and a microprocessor. The communication module may be a transceiver circuit, a communication interface, or the like. The storage module may be a memory. When the processing module is a processor, the communication module is a communication interface, and the storage module is a memory, the communication apparatus 110 in this embodiment of this application may be the communication apparatus 500 shown in FIG. 5a or FIG. 5b.

FIG. 12 is a diagram of a structure of a communication apparatus 120. The communication apparatus 120 may be a network device, a chip in a network device, or a system on chip. The communication apparatus 120 may be configured to perform a function of the network device in the foregoing embodiments. In a possible implementation, the communication apparatus 120 shown in FIG. 12 includes a sending unit 1201, and further includes a processing unit 1202.

The sending unit 1201 is configured to: send a synchronization signal to a terminal; and send, on a first time domain resource, a wake-up signal to the terminal. The first time domain resource includes N first time units with a preset length, one wake-up signal occupies at least one of the N first time units with the preset length, N is a positive integer, a boundary location of the first time unit is determined based on a time domain location of the synchronization signal, and the wake-up signal indicates at least paging-related information.

Specifically, the foregoing related descriptions of the first time domain resource and the first time unit, and all related content of the steps in the method embodiments shown in FIG. 6 may be referenced to function descriptions of corresponding functional modules. Details are not described herein again. The communication apparatus 120 is configured to perform a function of the network device in the wake-up signal sending method shown in FIG. 6, and therefore may achieve same effects as the foregoing wake-up signal sending method.

In still another implementation, the communication apparatus 120 shown in FIG. 12 includes a processing module and a communication module. The processing module is configured to control and manage an action of the communication apparatus 120. For example, the processing module may support the communication apparatus 120 in performing a management function. The communication module may integrate a function of the sending unit 1201, and may be configured to support the communication apparatus 120 in performing steps 601 and 602 and communicating with another network entity, for example, communicating with a functional module or a network entity shown in FIG. 6. The communication apparatus 120 may further include a storage module, configured to store program code and data of the communication apparatus 120.

The processing module may be a processor or a controller. The processor may implement or execute various example logical blocks, modules, and circuits described with reference to content disclosed in this application. The processor may alternatively be a combination for implementing a computing function, for example, a combination of one or more microprocessors, or a combination of a DSP and a microprocessor. The communication module may be a transceiver circuit, a communication interface, or the like. The storage module may be a memory. When the processing module is a processor, the communication module is a communication interface, and the storage module is a memory, the communication apparatus 120 in this embodiment of this application may be the communication apparatus 500 shown in FIG. 5a or FIG. 5b.

FIG. 13 is a diagram of a structure of a communication system according to an embodiment of this application. As shown in FIG. 13, the communication system may include terminals 130 and a network device 131. A function of the terminal 130 is the same as a function of the communication apparatus 110. A function of the network device 131 is the same as that of the communication apparatus 120. Details are not described again.

An embodiment of this application further provides a computer-readable storage medium. All or some of the procedures in the foregoing method embodiments may be completed by a computer program instructing related hardware. The program may be stored in the computer-readable storage medium. When the program is executed, the procedures of the foregoing method embodiments may be performed. The computer-readable storage medium may be a terminal in any one of the foregoing embodiments, for example, an internal storage unit including a data transmit end and/or a data receive end, such as a hard disk or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like that are configured on the terminal. Further, the computer-readable storage medium may alternatively include both the internal storage unit of the terminal and the external storage device. The computer-readable storage medium is configured to store the computer program and other programs and data that are required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not describe a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information. In addition, "connection" in embodiments of this application means various connection manners such as a direct connection or an indirect connection, for implementing communication between devices. This is not limited in embodiments of this application.

Unless otherwise specified, "transmit/transmission" (transmit/transmission) in embodiments of this application means bidirectional transmission, and includes a sending action and/or a receiving action. Specifically, "transmit/transmission" in embodiments of this application includes data sending, data receiving, or data sending and data receiving. That is, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. "Network" and "system" in embodiments of this application express a same concept, and a communication system is a communication network.

Based on the foregoing descriptions of the implementations, a person skilled in the art may clearly understand that for the purpose of convenient and brief descriptions, grouping of the foregoing functional modules is merely used as an example for descriptions. During actual application, the foregoing functions may be allocated to different functional modules for implementation according to a requirement. That is, an inner structure of an apparatus is grouped into different functional modules, to implement all or some of the functions described above.

In several embodiments provided in this application, it should be understood that the disclosed apparatus and method may be implemented in other manners. For example, the described apparatus embodiments are merely examples. For example, grouping of the modules or units is merely logical function grouping. During actual implementation, another grouping manner may be used. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate. Parts displayed as units may be one or more physical units, that is, may be located in one place, or may be distributed at a plurality of different places. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for enabling a device such as a single-chip microcomputer or a chip or for enabling a processor (processor) to perform all or some of the steps of the methods in embodiments of this application. The storage medium includes any medium that can store program code, such as a USB flash drive, a removable hard disk, a ROM, a RAM, a magnetic disk, or an optical disc.

## Claims

1. A wake-up signal sending method, wherein the method comprises:
receiving, by a terminal, a synchronization signal from a network device; and
receiving, by the terminal on a first time domain resource, a wake-up signal from the network device, wherein the first time domain resource comprises N first time units with a preset length, one wake-up signal occupies at least one of the N first time units with the preset length, N is a positive integer, a boundary location of the first time unit is determined based on a time domain location of the synchronization signal, and the wake-up signal indicates at least paging-related information.

2. The method according to claim 1, wherein
the first time unit comprises a plurality of symbols, and one symbol corresponds to one coded bit.

3. The method according to claim 1 or 2, wherein that a boundary location of the first time unit is determined based on a time domain location of the synchronization signal comprises:
the boundary location of the first time unit is determined based on a start location of the synchronization signal; or
the boundary location of the first time unit is determined based on an end location of the synchronization signal.

4. The method according to claim 3, wherein the first time unit is a 1^{st} time unit in the first time domain resource, and that the boundary location of the first time unit is determined based on a start location of the synchronization signal comprises: a start location of the first time unit is a location that is after the start location of the synchronization signal and that is at a first preset gap from the start location of the synchronization signal; and
that the boundary location of the first time unit is determined based on an end location of the synchronization signal comprises: the start location of the first time unit is the end location of the synchronization signal; or the start location of the first time unit is a location that is after the end location of the synchronization signal and that is at a second preset gap from the end location of the synchronization signal.

5. The method according to any one of claims 1 to 4, wherein
the wake-up signal comprises indication information, wherein the indication information indicates an index value of a first time unit occupied by the wake-up signal, or an index value of a start time unit occupied by the wake-up signal.

6. The method according to any one of claims 1 to 5, wherein the receiving, by a terminal, a wake-up signal from a network device comprises:
obtaining, by the terminal, a timing index, wherein the timing index indicates an index value of the first time domain resource; and
receiving, by the terminal, the wake-up signal from the network device in the time window based on the timing index and first configuration information, wherein the first configuration information is used to configure the time window, and the time window is comprised in the first time domain resource, or the time window comprises the first time domain resource.

7. The method according to claim 6, wherein
the timing index is determined based on first information, and the first information is carried in the synchronization signal; or
there is a mapping relationship between a timing index and a synchronization sequence of a synchronization signal, and the timing index is determined based on the mapping relationship and a synchronization sequence of the synchronization signal; or
the timing index is determined based on second information and a synchronization sequence of the synchronization signal.

8. The method according to claim 7, wherein that the timing index is determined based on second information and a synchronization sequence of the synchronization signal comprises: the timing index is determined based on M1 information bits and M2 information bits, wherein
the M1 information bits are carried in the synchronization signal, the second information comprises the M1 information bits, there is a mapping relationship between the M2 information bits and the synchronization sequence of the synchronization signal, the M2 information bits are determined based on the synchronization sequence of the synchronization signal, and M1 and M2 are positive integers.

9. The method according to any one of claims 1 to 8, wherein
a start location of the first time domain resource is the end location of the synchronization signal; or
a start location of the first time domain resource is a location that is after the end location of the synchronization signal and that is at a third preset gap from the end location of the synchronization signal.

10. The method according to any one of claims 1 to 9, wherein
an end location of the first time domain resource is a start location of a next synchronization signal adjacent to the synchronization signal; or
an end location of the first time domain resource is a location that is before a next synchronization signal adjacent to the synchronization signal and that is at a fourth preset gap from a start location of the next synchronization signal adjacent to the synchronization signal.

11. The method according to any one of claims 1 to 10, wherein
the wake-up signal comprises a first wake-up signal and a second wake-up signal; and
a data rate of the first wake-up signal is lower than a data rate of the second wake-up signal, and a quantity of first time units occupied by the first wake-up signal is greater than a quantity of first time units occupied by the second wake-up signal.

12. The method according to any one of claims 1 to 11, comprising:
receiving, by the terminal, second configuration information from the network device, wherein
the second configuration information is used to configure a reserved resource, and the synchronization signal cannot be sent on the reserved resource.

13. The method according to claim 12, wherein
the reserved resource is comprised in a candidate sending location of the synchronization signal, and the candidate sending location of the synchronization signal is determined based on a sending periodicity of the synchronization signal.

14. The method according to any one of claims 1 to 13, wherein
a waveform of the synchronization signal is the same as a waveform of the wake-up signal; and/or
a modulation scheme of the synchronization signal is the same as a modulation scheme of the wake-up signal.

15. The method according to any one of claims 1 to 14, wherein
the modulation scheme of the synchronization signal and the modulation scheme of the wake-up signal are on-off keying OOK; and/or
the waveform of the synchronization signal and/or the waveform of the wake-up signal are/is OOK.

16. The method according to any one of claims 1 to 15, wherein one or more terminals that need to receive paging and that are indicated by the wake-up signal comprise the terminal; and the method further comprises:
receiving, by the terminal, first information from the network device and/or performing random access, wherein
the first information comprises one or more of the following information: paging downlink control information DCI, a paging message paging message, and a paging early indication PEI.

17. The method according to claim 16, wherein the terminal comprises a first module and a second module, wherein
the terminal receives the synchronization signal and the wake-up signal via the first module, and the terminal receives the first information and/or performs random access via the second module.

18. The method according to claim 16 or 17, comprising:
receiving, by the terminal, the synchronization signal and the wake-up signal through a first link, wherein a frequency domain resource corresponding to the first link comprises the first frequency domain resource; and
receiving, by the terminal, the first information from the network device and/or performing random access through a second link, wherein a frequency domain resource corresponding to the second link comprises the second frequency domain resource.

19. The method according to claim 18, wherein the first frequency domain resource is the same as or different from the second frequency domain resource.

20. A communication system, wherein the communication system comprises a terminal and a network device, wherein
the network device is configured to: send a synchronization signal to the terminal; and send, on a first time domain resource, a wake-up signal to the terminal, wherein the first time domain resource comprises N first time units with a preset length, one wake-up signal occupies at least one of the N first time units with the preset length, N is a positive integer, a boundary location of the first time unit is determined based on a time domain location of the synchronization signal, and the wake-up signal indicates at least paging-related information; and
the terminal is configured to: receive the synchronization signal from the network device; and receive, on the first time domain resource, the wake-up signal from the network device.

21. A communication apparatus, wherein the communication apparatus comprises a processor and a communication interface, and the processor and the communication interface are configured to support the communication apparatus in performing the method according to any one of claims 1 to 19.

22. A computer-readable storage medium, wherein the computer-readable storage medium stores computer instructions, and when the computer instructions are run on a computer, the computer is enabled to perform the method according to any one of claims 1 to 19.

23. A computer program product, wherein the computer program product comprises computer instructions, and when the computer instructions are run on a computer, the computer is enabled to perform the method according to any one of claims 1 to 19.

24. A chip, wherein the chip is coupled to a memory, and is configured to read and execute program instructions stored in the memory, to implement the method according to any one of claims 1 to 19.
